(19) **Europäisches Patentamt**
**European Patent Office**
**Office européen des brevets**

(11) **EP 1 602 187 B1**

(12) **EUROPEAN PATENT SPECIFICATION**

(45) Date of publication and mention
of the grant of the patent:
**14.02.2007 Bulletin 2007/07**

(51) Int Cl.:
*H04J 13/02* (2006.01)    *H04J 9/00* (2006.01)
*H04B 7/26* (2006.01)    *H04B 7/005* (2006.01)

(21) Application number: **04719866.8**

(22) Date of filing: **11.03.2004**

(86) International application number:
**PCT/US2004/007712**

(87) International publication number:
**WO 2004/084450 (30.09.2004 Gazette 2004/40)**

(54) **METHOD AND SYSTEM FOR A DATA TRANSMISSION IN A COMMUNICATION SYSTEM**

VERFAHREN UND SYSTEM ZUR DATENÜBERTRAGUNG IN EINEM KOMMUNIKATIONSSYSTEM

METHODE ET SYSTEME POUR UNE TRANSMISSION DE DONNEES DANS UN SYSTEME DE COMMUNICATION

(84) Designated Contracting States:
**AT BE BG CH CY CZ DE DK EE ES FI FR GB GR HU IE IT LI LU MC NL PL PT RO SE SI SK TR**

(30) Priority: **13.03.2003 US 389091**
**13.03.2003 US 389170**
**13.03.2003 US 389716**
**13.03.2003 US 389656**

(43) Date of publication of application:
**07.12.2005 Bulletin 2005/49**

(73) Proprietor: **QUALCOMM INCORPORATED**
**San Diego, California 92121 (US)**

(72) Inventors:
• **ATTAR, Rashid Ahmed**
**San Diego, CA 92127 (US)**
• **BHUSHAN, Naga**
**San Diego, CA 92129 (US)**
• **AGRAWAL, Avneesh**
**San Diego, CA 92130 (US)**

(74) Representative: **Gates, Marie Christina Esther et al**
**c/o Tomkins & Co.**
**5 Dartmouth Road**
**Dublin 6 (IE)**

(56) References cited:
**EP-A- 0 568 291**    **US-A1- 2002 154 610**

• **DAHLMAN E ET AL: "Wide-band services in a DS-CDMA based FPLMTS system" VEHICULAR TECHNOLOGY CONFERENCE, 1996. MOBILE TECHNOLOGY FOR THE HUMAN RACE., IEEE 46TH ATLANTA, GA, USA, 28 APRIL-1 MAY 1996, NEW YORK, NY, USA, 28 April 1996 (1996-04-28), pages 1656-1660, XP010162674 ISBN: 0-7803-3157-5**
• **OJANPERÄ ET AL: "FRAMES-hybrid multiple access technology" IEEE ISSSTA. IEEE INTERNATIONAL SYMPOSIUM ON SPREAD SPECTRUM TECHNIQUES AND APPLICATIONS, no. 1, 22 September 1996 (1996-09-22), pages 320-324, XP002077020**

**Description**

**BACKGROUND**

**Field**

The present invention relates to communications in a wireline or a wireless communication system. More particularly, the present invention relates to a method and system for a data transmission in such a communication system.

**Background**

Communication systems have been developed to allow transmission of information signals from an origination station to a physically distinct destination station. In transmitting an information signal from the origination station over a communication channel, the information signal is first converted into a form suitable for efficient transmission over the communication channel. Conversion, or modulation, of the information signal involves varying a parameter of a carrier wave in accordance with the information signal in such a way that the spectrum of the resulting modulated carrier wave is confined within the communication channel bandwidth. At the destination station, the original information signal is reconstructed from the modulated carrier wave received over the communication channel. In general, such a reconstruction is achieved by using an inverse of the modulation process employed by the origination station.

Modulation also facilitates multiple-access, i.e., simultaneous transmission and/or reception, of several signals over a common communication channel. Several multiple-access techniques are known in the art, such as time division multiple-access (TDMA), and frequency division multiple-access (FDMA). Another type of a multiple-access technique is a code-division multiple-access (CDMA) spread spectrum system that conforms to the "TIA/EIA/IS-95 Mobile Station-Base Station Compatibility Standard for Dual-Mode Wide-Band Spread Spectrum Cellular System," hereinafter referred to as the IS-95 standard. The use of CDMA techniques in a multiple-access communication system is disclosed in U.S. Patent No. 4,901,307, entitled "SPREAD SPECTRUM MULTIPLE-ACCESS COMMUNICATION SYSTEM USING SATELLITE OR TERRESTRIAL REPEATERS," and U.S. Patent No. 5,103,459, entitled "SYSTEM AND METHOD FOR GENERATING WAVEFORMS IN A CDMA CELLULAR TELEPHONE SYSTEM," both assigned to the present assignee.

A multiple-access communication system may be wireless or wire-line and may carry voice traffic and/or data traffic. An example of a communication system carrying both voice and data traffic is a system in accordance with the IS-95 standard, which specifies transmitting voice and data traffic over a communication channel. A method for transmitting data in code channel frames of fixed size is described in detail in U.S. Patent No. 5,504,773, entitled "METHOD AND APPARATUS FOR THE FORMATTING OF DATA FOR TRANSMISSION," assigned to the present assignee. In accordance with the IS-95 standard, the data traffic or voice traffic is partitioned into code channel frames that are 20 milliseconds wide with data rates as high as 14.4 Kbps. Additional examples of communication systems carrying both voice and data traffic comprise communication systems conforming to the "3rd Generation Partnership Project" (3GPP), embodied in a set of documents including Document Nos. 3G TS 25.211, 3G TS 25.212, 3G TS 25.213, and 3G TS 25.214 (the W-CDMA standard), or "TR-45.5 Physical Layer Standard for cdma2000 Spread Spectrum Systems" (the IS-2000 standard).

The term base station is an access network entity, with which subscriber stations communicate. With reference to the IS-856 standard, the base station is also referred to as an access point. Cell refers to the base station or a geographic coverage area served by a base station, depending on the context in which the term is used. A sector is a partition of a base station, serving a partition of a geographic area served by the base station.

The term "subscriber station" is used herein to mean the entity with which an access network communicates. With reference to the IS-856 standard, the base station is also referred to as an access terminal. A subscriber station may be mobile or stationary. A subscriber station may be any data device that communicates through a wireless channel or through a wired channel, for example fiber optic or coaxial cables. A subscriber station may further be any of a number of types of devices including but not limited to PC card, compact flash, external or internal modem, or wireless or wireline phone. A subscriber station that is in the process of establishing an active traffic channel connection with a base station is said to be in a connection setup state. A subscriber station that has established an active traffic channel connection with a base station is called an active subscriber station, and is said to be in a traffic state.

The term access network is a collection of at least one base station (BS) and one or more base stations' controllers. The access network transports information signals between multiple subscriber stations. The access network may be further connected to additional networks outside the access network, such as a corporate intranet or the Internet, and may transport information signals between each base station and such outside networks.

In the above-described multiple-access wireless communication system, communications between users are conducted through one or more base stations. The term user refers to both animate and inanimate entities. A first user on one wireless subscriber station communicates to a second user on a second wireless subscriber station by conveying information signal on a reverse link to a base station. The base station receives the information signal and conveys the information signal on a forward link to the second subscriber station. If the second subscriber station is not in the area served by the base station, the base station routes the data to another base station, in whose service area the second subscriber station is located. The second base station then conveys the information signal on a forward link to the second subscriber station. The forward link refers to transmissions from a base station to a wireless subscriber station and the reverse link refers to transmissions from a wireless subscriber station to a base station. Likewise, the communication can be conducted between a first user on a wireless subscriber station and a second user on a landline station. A base station receives the data from the first user on the wireless subscriber station on a reverse link, and routes the data through a public switched telephone network (PSTN) to the second user on a landline station. In many communication systems, e.g., IS-95, W-CDMA, and IS-2000, the forward link and the reverse link are allocated separate frequencies.

Study of voice traffic only services and data traffic only services revealed some substantial differences between the two types of services. One difference concerns delay in delivery of the information content. The voice traffic services impose stringent and fixed delay requirements. Typically, an overall one-way delay of a predetermined amount of voice traffic information, referred to as a speech frame, must be less than 100 ms.. In contrast, the overall one-way data traffic delay may be a variable parameter, used to optimize the efficiency of the data traffic services provided by the communication system. For example, multi-user diversity, delay of data transmission until more favorable conditions, more efficient error correcting coding techniques, which require significantly larger delays than delays that can be tolerated by voice traffic services, and other techniques can be utilized. An exemplary efficient coding scheme for data is disclosed in U.S. Patent No. 5.933.462. issued 08/03/1999 to SINDHUSHAYANA ET AL., entitled "SOFT DECISION OUTPUT DECODER FOR DECODING CONVOLUTIONALLY ENCODED CODEWORDS," filed November 6, 1996, now U.S. Patent No. 5,933,462, issued August 3, 1999 to Sindhushayana et al. assigned to the present assignee.

Another significant difference between voice traffic services and data traffic services is that the former require a fixed and common grade of service (GOS) for all users. Typically, for digital communication systems providing voice traffic services, this requirement translates into a fixed and equal transmission rate for all users and a maximum tolerable value for the error rates of speech frames. In contrast, the GOS for data services may be different from user to user, and may be a variable parameter, whose optimization increases the overall efficiency of the data traffic service providing communication system. The GOS of a data traffic service providing communication system is typically defined as the total delay incurred in the transfer of a predetermined amount of data traffic information may comprise, e.g., a data packet. The term packet is a group of bits, including data (payload) and control elements, arranged into a specific format. The control elements comprise, e.g., a preamble, a quality metric, and others known to one skilled in the art. Quality metric comprises, e.g., a cyclic redundancy check (CRC), a parity bit, and others known to one skilled in the art.

Yet, another significant difference between voice traffic services and data traffic services is that the former requires a reliable communication link. When a subscriber station, communicating voice traffic with a first base station, moves to the edge of the cell served by the first base station, the subscriber station enters a region of overlap with another cell served by a second base station. The subscriber station in such a region establishes a voice traffic communication with the second base station while maintaining a voice traffic communication with the first base station. During such a simultaneous communication, the subscriber station receives a signal carrying identical information from two base stations. Likewise, both of the base stations also receive signals carrying information from the subscriber station.

Such a simultaneous communication is termed soft hand-off. When the subscriber station eventually leaves the cell served by the first base station, and breaks the voice traffic communication with the first base station, the subscriber station continues the voice traffic communication with the second base station. Because soft hand-off is a "make before break" mechanism, the soft-handoff minimizes the probability of dropped calls. A method and system for providing a communication with a subscriber station through more than one base station during the soft hand-off process are disclosed in U.S. Patent No. 5,267,261, entitled "MOBILE ASSISTED SOFT HAND-OFF IN A CDMA CELLULAR TELEPHONE SYSTEM," assigned to the present assignee.

Softer hand-off is a similar process whereby the communication occurs over at least two sectors of a multi-sector base station. The process of softer hand-off is described in detail in co-pending U.S. Patent No. 5,933,787, issued 08/03/1999 to Gilhousen et al., entitled "METHOD AND APPARATUS FOR PERFORMING HAND-OFF BETWEEN SECTORS OF A COMMON BASE STATION," filed December 11, 1996, now U.S. Patent No. 5,933,787, issued on August 3, 1999 to Gilhousen et al. assigned to the present assignee. Thus, both soft and softer hand-off for voice services result in redundant transmissions from two or more base stations to improve reliability.

This additional reliability is not so important for data traffic communications because the data packets received in error can be retransmitted. Important parameters for data services are transmission delay required to transfer a data packet and the average throughput of the data traffic communication system. The transmission delay does not have the same impact in data communication as in voice communication, but the transmission delay is an important metric for measuring the quality of the data communication system. The average throughput rate is a measure of the efficiency of the data transmission capability of the communication system. Because of relaxed transmission delay requirement, the transmit power and resources used to support soft hand-off on the forward link can be used for transmission of additional data, thus, increasing average throughput rate by increasing efficiency.

The situation is different on the reverse link. Several base stations can receive the signal transmitted by a subscriber station. Because re-transmission of packets from a subscriber station requires additional power from a power limited source (a battery), it may be efficient to support soft hand-off on the reverse link by allocating resources at several base stations to receive and process the data packets transmitted from the subscriber station. Such a utilization of soft-handoff increases both coverage and reverse link capacity as discussed in a paper by Andrew J. Viterbi and Klein S. Gilhousen: "Soft Handoff Extends CDMA Coverage and Increases Link Capacity," IEEE Journal on Selected Areas in Communications, Vol. 12, No. 8, October 1994. The term soft hand-off is a communication between a subscriber station and two or more sectors, wherein each sector belongs to a different cell. In the context of the IS-95 standard, the reverse link communication is received by both sectors, and the forward link communication is simultaneously carried on the two or more sectors' forward links. In the context of the IS-856 standard, data transmission on the forward link is non-simultaneously carried out between one of the two or more sectors and the access terminal. Additionally, softer handoff may be used for this purpose. The term softer hand-off is a communication between a subscriber station and two or more sectors, wherein each sector belongs to the same cell. In the context of the IS-95 standard, the reverse link communication is received by both sectors, and the forward link communication is simultaneously carried on one of the two or more sectors' forward links. In the context of the IS-856 standard, data transmission on the forward link is non-simultaneously carried out between one of the two or more sectors and the access terminal.

It is well known that quality and effectiveness of data transfer in a wireless communication system is dependent on the condition of a communication channel between a source terminal and a destination terminal. Such a condition, expressed as, for example, a signal-to-interference-and-noise-ratio (SINR), is affected by several factors, e.g., a path loss and the path loss' variation of a subscriber station within a coverage area of a base station, interference from other subscriber stations both from the same-cell and from other-cell, interference from other base stations, and other factors know to one of ordinary skill in the art. In order to maintain a certain level of service under variable conditions of the communication channel, TDMA and FDMA systems resort to separating users by different frequencies and and/or time-slots and support frequency reuse to mitigate the interference. Frequency reuse divides an available spectrum into many sets of frequencies. A given cell uses frequencies from only one set; the cells immediately adjacent to this cell may not use a frequency from the same set. In a CDMA system, the identical frequency is reused in every cell of the communication system, thereby improving the overall efficiency. The interference is mitigated by other techniques, e.g., orthogonal coding, transmission power control, variable rate data, and other techniques known to one of ordinary skill in the art.

The above-mentioned concepts were utilized in a development of a data traffic only communication system known as the High Data Rate (HDR) communication system: Such a communication system is disclosed in detail in U.S Patent No. 6,574,211 issued 06/03/2003 to Padovani et al., entitled "METHOD AND APPARATUS FOR HIGH RATE PACKET DATA TRANSMISSION," filed November 3, 1997, now U.S. Patent No. 6,574,211 issued on June 3, 2003 to Padovani et al. assigned to the present assignee. The HDR communication system was standardized as a TIA/EIA/IS-856 industry standard hereinafter referred to as the IS-856 standard.

The IS-856 standard defines a set of data rates, ranging from 38.4 kbps to 2.4 Mbps, at which an access point (AP) may send data to a subscriber station (access terminal). Because the access point is analogous to a base station, the terminology with respect to cells and sectors is the same as with respect to voice systems. In accordance with the IS-856 standard, the data to be transmitted over the forward link are partitioned into data packets, with each data packet being transmitted over one or more intervals (time-slots), into which the forward link is divided. At each time-slot, data transmission occurs from an access point to one and only one access terminal, located within the coverage area of the access point, at the maximum data rate that can be supported by the forward link and the communication system. The access terminal is selected in accordance with forward link conditions between the access point and an access terminal. The forward link conditions depend on interference and path loss between an access point and an access terminal, both of which are time-variant. The path loss and the variation of the path loss are exploited by scheduling the access point's transmissions at time intervals, during which the access terminal's forward link conditions to a particular access point satisfy determined criteria that allow for transmissions with less power or higher rate of data than transmissions to the remaining access terminals, thus improving spectral efficiency of forward link transmissions.

In contrast, according to the IS-856 standard, data transmissions on the reverse link occur from multiple access terminals located within a coverage area of an access point. Furthermore, because the access terminals' antenna patterns are omnidirectional, any access terminal within the coverage area of the access point may receive these data transmissions. Consequently, the reverse link transmissions are subjected to several sources of interference: code-division multiplexed overhead channels of other access terminals, data transmissions from access terminals located in the coverage area of the access point (same-cell access terminals), and data transmissions from access terminals located in the coverage area of other access points (other-cell access terminals). Multiplex or multiplexing in general means communicating multiple data streams over one communication channel.

With the development of wireless data services, the emphasis has been on increasing data throughput on the forward link, following the model of Internet services; where a server provides a high rate data in response to requests from a host. The server-to-host direction is akin to a forward link requiring a high throughput, while the host-to-server requests and/or data transfers are at lower throughput. However, present developments indicate a growth of reverse link data intense applications, e.g., file transfer protocol (FTP), video conferencing, gaming and other constant rate of data services. Such applications require improved efficiency of the reverse link to achieve higher data rates, so that applications demanding high throughput over reverse link. Therefore, there is a need in the art to increase data throughput on the reverse link, ideally to provide symmetric forward and reverse links throughputs.

Embodiments of an inventive reverse link transmission method and apparatus are disclosed in a co-pending applications serial numbers 10/313,553 and 10/313,594, entitled "METHOD AND APPARATUS FOR A DATA TRANSMISSION OVER A REVERSE LINK IN A COMMUNICATION SYSTEM," filed December 6, 2002, assigned to the assignee of the present invention. The inventive reverse link transmission method and apparatus may not be fully applicable to already built (legacy) communication systems due to link-budget considerations, as explained in detail below. Consequently, introduction of the inventive reverse link transmission method and apparatus of the applications serial numbers 10/313,553 and 10/313,594, to legacy communication systems presents issues related to above-mentioned link-budget considerations, and co-existence of subscriber stations capable of receiving the inventive reverse link (new subscriber stations) and subscriber stations capable of receiving only the IS-856 reverse link (legacy subscriber stations). Additionally, the inventive reverse link transmission method and apparatus further create need in the art for method and apparatus for a power control and a rate of data determination.

Document US 2002/0154610 discloses a method for power control in which a traffic-to-pilot ratio is adjusted.

Therefore, there is a need in the art to for an apparatus and method enabling increased data throughput on the reverse link taking into consideration the above-described issues.

This application is related to U.S. Application Publication No. 20040179494 entitled "Method and System for a Data Transmission in a Communication System," Published September 16, 2004; U.S. Application No. 10/389,716, (Attorney Docket No. 030215U3 entitled "Method and System For Estimating Parameters of a Link For Data Transmission in a Communication System," filed March 13, 2003; and U.S. Application No. 10/389,656, (Attorney Docket No. 030215U4) entitled "Method and System for a Power Control in a Communication System," filed March 13, 2003, all assigned to the assignee of the present invention.

## SUMMARY

In one aspect of the invention, the above stated needs are addressed by receiving at each of a first and a second subset of the set of access terminals an assignment of a sequence of intervals, each interval being associated with a mode of multiple-access, wherein the second subset is mutually exclusive from the first subset; receiving at each of the first subset of access terminals a scheduling decision for an interval associated with a first mode of multiple-access, the interval being divided into a first portion and a second portion, the first portion comprising overhead channels; selecting at each of the first subset of access terminals a mode for data multiplexing, wherein a first mode comprises building user data into only the first portion of the interval using multiplexing format; a second mode comprises building user data only into at least one sub-division of the second portion of the interval, wherein each of the at least one sub-division is associated with multiplexing format; and a third mode comprises building user data into the interval combining the first mode and the second mode; and transmitting from at least one of the first subset of access terminals user data in the interval associated with the first mode of multiple-access using the selected mode of data multiplexing in accordance with the scheduling decision.

In another aspect of the invention, the above stated needs are addressed by selecting at each of the second subset of access terminals a mode for data multiplexing, wherein a third mode comprises building user data into only the first portion of the interval using multiplexing format; a fourth mode comprises building user data only into the second portion of the interval using the multiplexing format; and a third mode comprises building user data into the interval combining the first mode and the second mode; and transmitting from at least one of the second subset of access terminals user data in the interval associated with the second mode of multiple-access using the selected mode of data multiplexing.

In another aspect of the invention, the above stated needs are addressed by transmitting from at least one of the second subset of access terminals user data in the interval associated with a first mode of multiple-access using the first mode of data multiplexing.

In another aspect of the invention, the above stated needs are addressed by transmitting the user data from a third subset of the set of access terminals; said third subset being mutually exclusive from the first subset and the second subset.

## BRIEF DESCRIPTION OF THE DRAWINGS

**FIG. 1** illustrates conceptual block diagram of a communication system capable of operation in accordance with embodiments of the present invention;

**FIG. 2** illustrates an embodiment of a forward link waveform of the present invention;

**FIG. 3** illustrates a method of communicating power control commands and packet grant commands over a reverse power control channel;

**FIGs. 4a-4d** illustrate an embodiment of a reverse link waveform;

**FIGs. 5a-5c** illustrate an embodiment of a reverse link channels' architecture;

**FIGs. 6a-6c** illustrate conceptual block diagram of an OFDM communication system;

**FIG. 7** illustrates an embodiment of a reverse link data transmission; and

**FIG. 8** illustrates an embodiment of a reverse link data re-transmission;

**FIG. 9** illustrates access terminal; and

**Fig. 10** illustrates access point.

## DETAILED DESCRIPTION

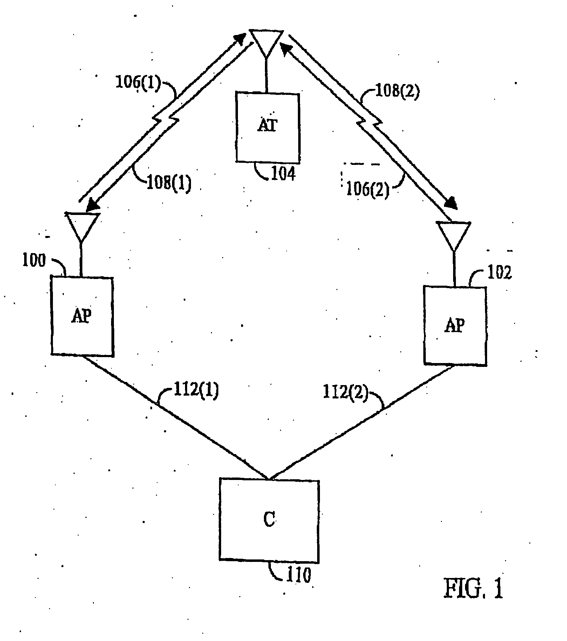

**FIG. 1** illustrates a conceptual diagram of a communication system. Such a communication system can be built in accordance with the IS-856 standard. An access point **100** transmits data to an access terminal **104** over a forward link **106(1),** and receives data from the access terminal **104** over a reverse link **108(1).** Similarly, an access point **102** transmits data to the access terminal **104** over a forward link **106(2),** and receives data from the access terminal **104** over a reverse link **108(2).** Data transmission on the forward link occurs from one access point to one access terminal at or near the maximum data rate that can be supported by the forward link and the communication system. Additional channels of the forward link, e.g., control channel, may be transmitted from multiple access points to one access terminal. Reverse link data communication may occur from one access terminal to one or more access points. The access point **100** and the access point **102** are connected to a access network controller **110** over backhauls **112(1)** and **112(2).** A "backhaul" is a communication link between a controller and an access point. Although only two access terminals and one access point are shown in FIG. 1, this is for the sake of explanation only, and the communication system can comprise a plurality of access terminals and access points.

After registration, which allows an access terminal to access an access network, the access terminal **104** and one of the access points, e.g., the access point **100,** establish a communication link using a predetermined access procedure. In the connected state, resulting from the predetermined access procedure, the access terminal **104** is able to receive data and control messages from the access point **100,** and is able to transmit data and control messages to the access point **100.** The access terminal **104** continually searches for other access points that could be added to the access terminal's **104** active set. An active set comprises a list of access points capable of communication with the access terminal **104.** When such an access point is found, the access terminal **104** calculates a quality metric of the access point's forward link, which may comprise a signal-to-interference and-noise ratio (SINR). An SINR may be determined in accordance with a pilot signal. The access terminal **104** searches for other access points and determines access points' SINR. Simultaneously, the access terminal **104** calculates a quality metric of a forward link for each access point in the access terminal's **104** active set. If the forward link quality metric from a particular access point is above a predetermined add threshold or below a predetermined drop threshold for a predetermined period of time, the access terminal **104** reports this information to the access point **100.** Subsequent messages from the access point **100** may direct the access terminal **104** to add to or to delete from the access terminal **104** active set the particular access point.

The access terminal **104** selects a serving access point from the access terminal's **104** active set based on a set of parameters. A serving access point is an access point that is selected for data communication a particular access terminal or an access point that is communicating data to the particular access terminal. The set of parameters may comprise any one or more of present and previous SINR measurements, a bit-error-rate, a packet-error-rate, for example, and any other known parameters. Thus, for example, the serving access point may be selected in accordance with the largest SINR measurement. The access terminal **104** then broadcasts a data request message (DRC message) on a data request channel (DRC channel). The DRC message can contain a requested data rate or, alternatively, an indication of a quality of the forward link, e.g., measured SINR, a bit-error-rate, a packet-error-rate and the like. The access terminal **104** may direct the broadcast of the DRC message to a specific access point by the use of a code, which uniquely identifies the specific access point. Typically, the code comprises a Walsh code. The DRC message symbols are exclusively OR'ed (XOR) with the unique code. This XOR operation is referred to as code covering of a signal. Since each access point in the active set of the access terminal **104** is identified by a unique Walsh code, only the selected access point which performs the identical XOR operation as that performed by the access terminal **104** with the correct Walsh code can correctly decode the DRC message.

The data to be transmitted to the access terminal **104** arrive at the access network controller **110.** Thereafter, the access network controller **110** may send the data to all access points in the access terminal **104** active set over the backhaul **112.** Alternatively, the access network controller **110** may first determine, which access point was selected by the access terminal **104** as the serving access point, and then send the data to the serving access point. The data are stored in a queue at the access point(s). A paging message is then sent by one or more access points to the access terminal **104** on respective control channels. The access terminal **104** demodulates and decodes the signals on one or more control channels to obtain the paging messages.

At each forward link interval, the access point may schedule data transmissions to any of the access terminals that received the paging message. An exemplary method for scheduling transmission is described in U.S. Patent No. 6,229,795, entitled "System for allocating resources in a communication system," assigned to the present assignee. The access point uses the rate control information received in the DRC message from each access terminal to efficiently transmit forward link data at the highest possible rate. Because the rate of data may vary, the communication system operates in a variable rate mode. The access point determines the data rate at which to transmit the data to the access terminal **104** based on the most recent value of the DRC message received from the access terminal **104.** Additionally, the access point uniquely identifies a transmission to the access terminal **104** by using a spreading code, which is unique to that mobile station. This spreading code is a long pseudo noise (PN) code, for example a spreading code defined by the IS-856 standard.

The access terminal **104,** for which the data packet is intended, receives and decodes the data packet. Each data packet is associated with an identifier, e.g. a sequence number, which is used by the access terminal **104** to detect either missed or duplicate transmissions. In such an event, the access terminal **104** communicates the sequence numbers of the missing data packets via the reverse link data channel. The access network controller **110,** which receives the data messages from the access terminal **104** via the access point communicating with the access terminal **104,** then indicates to the access point what data units were not received by the access terminal **104.** The access point then schedules a re-transmission of such data packets.

When the communication link between the access terminal **104** and the access point **100,** operating in the variable rate mode, deteriorates below a predetermined reliability level, the access terminal **104** first attempts to determine whether another access point in the variable rate mode can support an acceptable rate of data. If the access terminal **104** ascertains such an access point (e.g., the access point **102),** a repointing to the access point **102** to a different communication link occurs. The term repointing is a selection of a sector that is a member of an access terminals' active list, wherein the sector is different than a currently selected sector. The data transmissions continue from the access point **102** in the variable rate mode.

The above-mentioned deterioration of the communication link can be caused by, e.g., the access terminal **104** moving from a coverage area of the access point **100** to the coverage area of the access point **102,** shadowing, fading, and other well known reasons. Alternatively, when a communication link between the access terminal **104** and another access point (e.g., the access point **102)** that may achieve a higher throughput rate than the currently used communication link becomes available, a repointing to the access point **102** to a different communication link occurs, and the data transmissions continue from the access point **102** in the variable rate mode. If the access terminal **104** fails to detect an access point that can operate in the variable rate mode and support an acceptable data rate, the access terminal **104** transitions into a fixed rate mode. In such a mode, access terminal transmits at one rate.

The access terminal **104** evaluates the communication links with all candidate access points for both variable rate data and fixed rate data modes, and selects the access point, which yields the highest throughput.

The access terminal **104** will switch from the fixed rate mode back to the variable rate mode if the sector is no longer a member of the access terminal **104** active set.

The above-described fixed rate mode and associated methods for transition to and from the fixed rate data mode are similar to those disclosed in detail in U.S. Application No. 6,205,129, entitled " METHOD AND APPARATUS FOR VARIABLE AND FIXED FORWARD LINK RATE CONTROL IN A MOBILE RADIO COMMUNICATION SYSTEM ," assigned to the present assignee. Other fixed rate modes and associated methods for transition to and from the fixed mode can also be contemplated and are within the scope of the present invention.

## Forward Link Structure

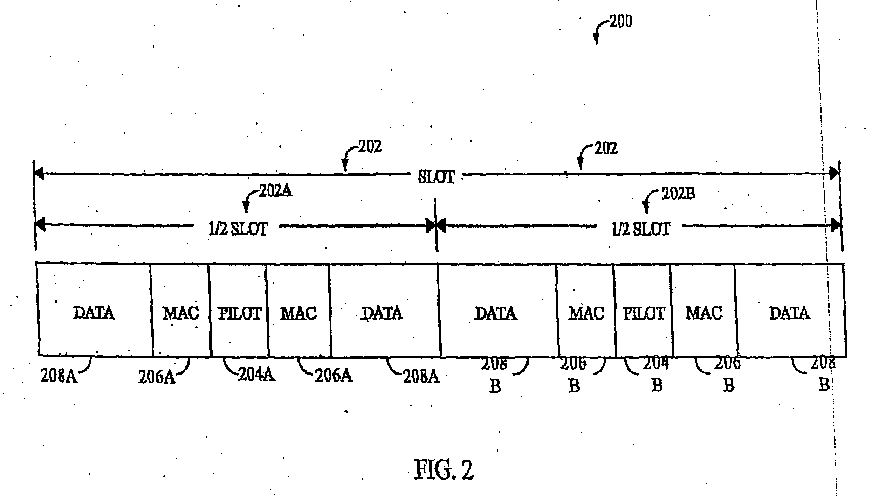

**FIG. 2** illustrates a forward link structure **200.** It will be appreciated that the below described time durations, chip lengths, value ranges are given in a way of example only, and other time durations, chip lengths, value ranges may be used without departing from the underlying principles of operation of the communication system. The term "chip" is a unit of a code spreading signal having two possible values.

The forward link **200** is defined in terms of frames. A frame is a structure comprising 16 time-slots **202,** each time-slot **202** being 2048 chips long, corresponding to a 1.66. ms. time-slot duration, and, consequently, a 26.66. ms. frame duration. Each time-slot **202** is divided into two half-time-slots **202a, 202b,** with pilot bursts **204a, 204b** transmitted within each half-time-slot **202a, 202b.** Each pilot burst **204a, 204b** is 96 chips long, centered about a mid-point of its associated half-time-slot **202a, 202b.** The pilot bursts **204a, 204b** comprise a pilot channel signal covered by a code, e.g., a Walsh code with index 0. A forward medium access control channel (MAC) **206** forms two bursts, which are transmitted immediately before and immediately after the pilot burst **204** of each half-time-slot **202.** The MAC is composed of up to 64 code channels, which are orthogonally covered by 64-ary code, e.g., Walsh code. Each code channel is identified by a MAC index, which has a value between 1 and 64, and identifies a unique 64-ary covering Walsh code. A reverse power control channel (RPC) is used to regulate the power of the reverse link signals for each subscriber station. The RPC is assigned to one of the available MACs, e.g., MAC with MAC index between 5 and 63. A Reverse Activity (RA) Channel is used to regulate the reverse link rate of data for each subscriber station by transmitting a reverse link activity bit (RAB) stream. The RA channel is assigned to one of the available MACs, e.g., MAC index 4. The forward link traffic channel or the control channel payload is sent in the remaining portions **208a** of the first half-time-slot **202a** and the remaining portions **208b** of the second half-time-slot **202b.** The traffic channel carries user data, while the control channel carries control messages, and may also carry user data. The control channel is transmitted with a cycle defined as a 256 slot period at a data rate of 76.8 kbps or 38.4 kbps. The term user data, also referred to as traffic, is information other than overhead data. The term overhead data is information enabling operation of entities in a communication system, e.g., call maintenance signaling, diagnostic and reporting information, and the like.

**Packed Grant Channels and Automatic Retransmission reQuest**

As discussed, the communication system may need to support both access terminals operating the reverse link in accordance with the IS-856 standard - legacy access terminals, and access terminals operating the reverse link in accordance with the described concept - new access terminals. To support such an operation, an additional channel, a packet grant (PG) channel, is needed on the forward link. The PG channel may be provided by changing modulation of one of the above-mentioned MAC channels, e.g., the RPC channel, from binary phase-shift keying (BPSK) to a quadrature-phase shift keying (QPSK). When a second portion of a reverse link interval is dedicated to only one access terminal (see below), only one PG channel, a primary PG channel, is needed.

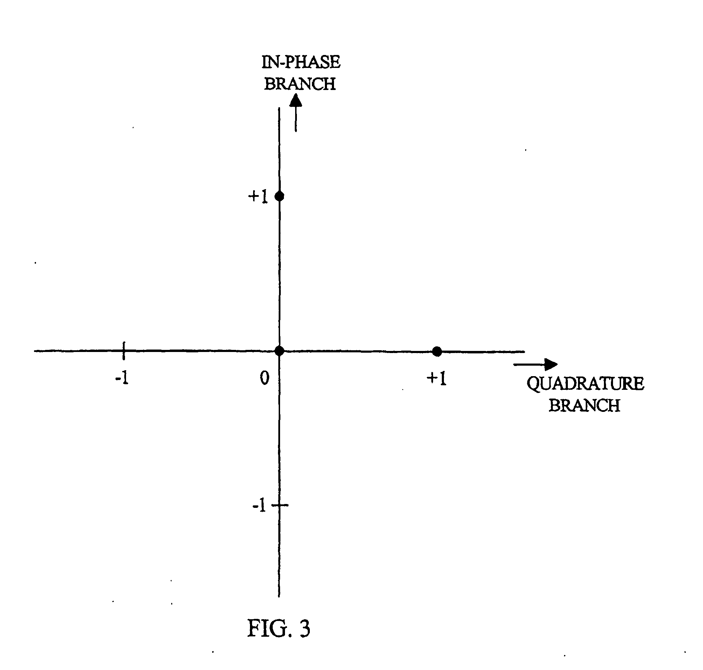

The power control commands are modulated on the in-phase branch of the RPC channel assigned to an access terminal. The power control command information is binary, wherein a first value of a power control bit ("up") commands the access terminal to increase the access terminal's transmit power by a first determined amount and a second value of a power control bit ("down") commands the access terminal to decrease the access terminal's transmit power by a second determined amount. As illustrated in **FIG. 3**, the "up" command is represented as +1; the "down" command is represented as -1. However, other values may be used.

The primary PG channel is communicated over the quadrature branch of the RPC channel assigned to the access terminal. Information transmitted on the primary PG channel is ternary. As illustrated in **FIG. 3**, the first value is represented as +1, the second value is represented as 0, and the third value is represented as -1. The information has the following meaning to both the access point and the access terminal:

+1 means that permission to transmit a new packet has been granted;
0 means that permission to transmit a packet has not been granted; and
-1 means that permission to transmit a previously transmitted packet (re-transmission) has been granted.

The above described signaling, in which transmission of information value 0 requires no signal energy, allows the access point to assign energy to the primary PG channel only when transmitting an indication to transmit a packet. Because only one or a small number of access terminals are granted permission to transmit on the reverse link in a time interval, the primary PG channel requires very little power in order to provide reverse link transmission information. Consequently, sufficient power can be allocated to the primary PG channel to ensure reliable reception of the primary PG channel at the Access Terminals without undue disturbance of power allocation. Consequently, impact on the RPC power allocation method is minimized. The RPC power allocation method is disclosed, e.g., in co-pending U.S. Patent Serial No. 6,678,257, entitled "Methods and apparatus for allocation of power to base station channels," issued January 13, 2004 and co-pending U.S. Patent Application Publication Serial No. 20040198404, entitled "Power Allocation for Power Control Bits in a Cellular Network," Published October 7, 2004, both assigned to the present assignee. Furthermore, the access terminal is required to perform a ternary decision on the quadrature stream only when the access terminal is expecting a response, following a data transmit request, or when the access terminal has a pending data transmission. However, it will be appreciated that the choice of the ternary values is a design choice, and values, other than the ones described may be used instead.

The access terminal receives and demodulates the RPC/primary PG channel from all access points in the access terminal's active set. Consequently, the access terminal receives the primary PG channel information conveyed over the quadrature branch of the RPC/primary PG channel for every access point in the access terminal's active set. The access terminal may filter the energy of the received primary PG channel information over one update interval, and compare the filtered energy against a set of thresholds. By appropriate choice of the thresholds, the access terminals that have not been granted permission for transmission, decode the primary PG channel value as 0 with high probability.

The information conveyed over the primary PG channel is further used as a means for Automatic Re-transmission reQuest.

When the reverse link transmission of a packet from an access terminal is being received only by a serving access point, the serving access point generates and transmits permission to transmit a new packet as a response to an access terminal's request to transmit a packet when the previous packet from the access terminal was received correctly. In this case, such information on the primary PG channel serves as an acknowledgement (ACK). The serving access point generates and transmits permission to re-transmit the previous packet as a response to the access terminal's request to transmit a packet if the previous packet from the access terminal was received incorrectly. Such information on the primary PG channel serves as a negative - acknowledgement (NACK). Therefore, no separate ACK/NACK channel is necessary.

Alternatively, the reverse link transmission of a packet from an access terminal may be received at plurality of access points.

When a non-serving access point receives and decodes the reverse link from the transmitting access terminal, the non-serving access point provides information whether or not the user data were successfully decoded to the serving access point. The serving access point then sends an ACK/NACK to the access terminal on the primary PG channel.

Alternatively, the access point(s) that received the payload information sends the payload information to centralized entity to perform soft-decision decoding. The centralized entity then notifies the serving access point whether the payload decoding was successful. The serving access point then sends an ACK/NACK to the access terminal on the primary PG channel.

Alternatively, upon decoding the reverse link, the non-serving access point may autonomously send an ACK/ NACK to the access terminal on the primary PG channel. It is, therefore, possible that an access terminal receives conflicting information on the primary PG channel, e.g., because some access points failed to correctly receive the access terminal's transmission, because the information on the primary PG channel was erased or incorrectly received, or for other known reasons. Consequently, the information transmitted in response to the reverse link transmission over the primary PG channel is interpreted differently when transmitted by a serving or non-serving access point. Because, from the access network perspective it does not matter, which access point received the access terminal's transmission, when the access terminal receives information on the primary PG channel interpreted as an ACK from any access point, it transmits a new packet at the next transmission grant, although the serving access terminal may have sent a permission to re-transmit a previously transmitted packet.

Because the access terminal makes a ternary decision on a primary PG channel received from a serving access point and a binary decision on a primary PG channel received from an access point, the access terminal may use different thresholds for the ternary decisions and the binary decision.

When a second portion of a reverse link interval is dedicated to only one access terminal (see below), the above-described PG channel provides satisfactory information. However, when the second portion of the reverse link interval is dedicated to multiple access terminals, additional information, namely, which of the access terminals that received a permission to transmit is to transmit in which sub-division of the second portion of the reverse link interval. Such information may be provided on a supplemental PG channel.

A structure of the supplemental PG channel is exactly the same as the above-described PG channel, except the supplemental PG channel has a different MAC index. Referring back to **FIG. 3**, the supplemental PG channel information is is communicated over the both the in-phase and the quadrature branch. The information is interpreted together with the information acquired from the PG channel as follows:

- when the PG channel informs the access terminal that permission to transmit a packet has not been granted, the supplemental PG channel information is ignored;
- when the PG channel informs the access terminal that that permission to transmit a new packet or the permission to transmit a previously transmitted packet (re-transmission) has been granted, then:

    0 means that the access terminal is to use the entire second portion of the reverse link interval;
    any of the remaining four values identifies one of four sub-divisions of the second portion of the reverse link interval.

Therefore, the above-described signaling can support four sub-divisions of the second portion of the reverse link interval. Should more sub-divisions be required, an additional supplemental PG channels may be added.

The PG channels, i.e., the MAC indexes, may be assigned to an access terminal upon the access terminal's accessing the communication system. Alternatively, the PG channel may be assigned to the access terminal, and the supplemental PG channels may be determined by the access terminal from the MAC index of the PG channel, e.g., by adding a determined offset to the PG channel.

**Reverse Activity Channel**

As described, above, a communication system in accordance with IS-856 standard uses a Reverse Activity Channel to regulate the reverse link rate of data for each subscriber station by transmitting a reverse link activity bit (RAB) stream. This Reverse Activity Channel is sufficient if only new terminals, transmitting in intervals designated for TDMA, are operating in the communication system. However, to support both legacy access terminals, and new access terminals transmitting in intervals designated for TDMA, an additional channel is needed on the forward link.

To support the reverse link rate of data for new access terminals transmitting in intervals designated for TDMA may require that the Reverse Activity Channel supports transmission of a value, regulating the rate of data, requiring more than one bit. Because it may be desirable not to change design of the forward link unduly, the additional Reverse Activity Channel may have the same structure as the legacy Reverse Activity Channel, but would be assigned a different MAC index. Because such a Reverse Activity Channel supports transmission of one bit only, the multi-bit value may be transmitted over several transmission instances of the Reverse Activity Channel.

The above-described forward link **200** is a modification of a forward link of a communication system in accordance with IS-856 standard. The modification is believed to have the least impact on the forward link structure, and consequently requires the least changes to the IS-856 standard. However, it will be appreciated that the teaching is applicable to different forward link structures. Thus, for example, the above-described forward link channels may be transmitted not sequentially but simultaneously. Additionally, any forward link structure, enabling communication of information provided in the PG, supplemental PG, and RA channel, e.g., a separate PG and ACK/NACK code channels, a new RA channel different from the legacy RA channel, may be used instead.

**Reverse Link**

As discussed above, quality and effectiveness of a data transfer is dependent on conditions of the channel between a source terminal and a destination terminal. Channel conditions depend on interference and path loss, both of which are time-variant. Therefore, the reverse link performance may be improved by methods to mitigate interference. On the reverse link, all access terminals in an access network may simultaneously transmit on the same frequency (one frequency reuse set) or multiple access terminals in the access network may simultaneously transmit on the same frequency (frequency reuse set greater than one). It is noted that the reverse link as described herein may utilize any frequency reuse. Therefore, any access terminal's reverse link transmission is subject to several sources of interference. The most dominant sources of interference are:

- transmission of code-division multiplexed overhead channels from other access terminals both from the same-cell and from other-cells;
- transmission of code-division multiplexed user data by access terminals in the same-cell; and
- transmission of code-division multiplexed user data by access terminals from other-cells.

Studies of reverse link performance in the code-division multiple access (CDMA) communication systems indicate that eliminating same-cell interference may achieve a significant improvement in the quality and effectiveness of the data transfer. Same-cell interference in the communication system employing CDMA, i.e., communication system in accordance with the IS-856 standard, may be mitigated by limiting the number of access terminals that may simultaneously transmit on the reverse link.

Because two modes of operation, i.e., limiting the number of simultaneously transmitting access terminals and allowing all access terminals to transmit simultaneously exists, the access network needs to indicate to the access terminals, which mode is to be used. The indication is communicated to the access terminals in periodic intervals, i.e., in a pre-determined portion of a forward link channel, e.g., every control channel cycle. Alternatively, the indication is communicated to the access terminals only upon change by a broadcast message in a forward link channel, e.g., a reverse power control channel.

When operating in the limiting mode, the above-described packed grant forward link channel may be utilized to provide permission or denial to transmit to the access terminals requesting permission to transmit.

The same-cell interference may also be mitigated by time-division-multiplexing traffic channel and overhead channels of the reverse link and by scheduling, which of the access terminals requesting transmission are allowed to transmit user data or traffic in the reverse link time interval, e.g., a frame, a time-slot, or any time interval supported by the communication system. The scheduling may take into account the entire access network, and may be carried out by a centralized entity, e.g., the access network controller 110. Such a scheduling method minimizes interference due to terminals transmitting in adjacent sectors of a cell. Alternatively, the scheduling may take into account a part of the access network comprising only one access point, and can be carried out by either a centralized entity or a de-centralized entity, e.g., an access point controller. Such a scheduling method mitigates only same-cell interference. Furthermore, a combination of the two methods may be used, where several access points, but not the entire network are scheduled by one entity.

It will be appreciated that the number of access terminals permitted to transmit in a time interval influences the interference on the reverse link, and, consequently the quality of service (QoS) on the reverse link. Therefore, the number of access terminals permitted to transmit is a design criterion. Consequently, such a number can be adjusted by the scheduling method in accordance with changing conditions and/or requirements on QoS.

Additional improvements may be achieved by mitigating other-cell interference. The other-cell interference during user data transmissions is mitigated by opportunistic transmission, control of maximum transmit power and rate of user data for each access terminal within a multi-sector cell. An "opportunistic transmission" (and multi-user diversity) implies scheduling an access terminal's transmissions in time interval(s) in which a determined opportunity threshold is exceeded. A time interval may be deemed to be opportune if a metric, determined in accordance with an instantaneous quality metric of the reverse link channel in the time interval, an average quality metric of that reverse link channel, and a function enabling differentiation between users (such as an impatience function described below), exceeds an opportunity threshold. The method enables the access terminal to transmit user data at a lower transmit power and/or to complete the transmission of a packet using fewer time intervals. The lower transmit power and/or completion of a packet transmission in fewer time intervals results in reduced: interference from the transmitting access terminals in sectors of the multi-sector cell, and, therefore, in lower overall other-cell interference to access terminals in adjacent cells. Alternatively, the better than average channel conditions allow the terminal to utilize the available power to transmit at a higher data rate, thus, causing the same interference to other-cells as the access terminal would cause by utilizing the same available power to transmit at a lower data rate during an inopportune transmit interval

In addition to mitigating interference on the reverse link channels, the path loss and the variation of the path loss may be exploited by multi-user diversity to increase throughput. "Multi-user diversity" results from the diversity of channel conditions among the access terminals due to, e.g., different locations experiencing different shadowing and fading as a function of time. The diversity in channel conditions among user terminals allows scheduling an access terminal's transmissions at time intervals, during which the access terminal's channel conditions satisfy determined criteria that allow for transmissions with less power or higher rate of data, thus improving spectral efficiency of reverse link transmissions. Such criteria comprises the quality metric of an access terminal's reverse link channel being better in relation to the average quality metric of the access terminal's reverse link channel.

A design of a scheduler may be used to control access terminals QoS. Thus, for example, by biasing the scheduler towards a subset of the access terminals, the subset may be given transmission priority, although the opportunity reported by these terminals may be lower than opportunity reported by terminals not belonging to the subset. It will be appreciated that a similar effect may be achieved by employing an impatience function discussed below. The term subset is a set whose members comprise at least one but up to all members of another set.

Even employing an opportunistic transmission method, the transmitted packet may be received erroneously and/or erased at an access point. The term erasure is failure to determine a content of the message with a required reliability. This erroneous reception stems from the inability of an access terminal to accurately predict the quality metric of the access terminal's reverse link channel due to the other-cell interference. The other-cell interference is difficult to quantify in a communication system in which, the transmissions of access terminals from sectors belonging to different multi-sector cells are unsynchronized, short, and uncorrelated.

To mitigate the incorrect channel estimation and provide interference averaging, Automatic Re-transmission reQuest (ARQ) methods are often used. ARQ methods detect missing or erroneously received packet(s) at a physical layer or a link layer and request re-transmission of these packets from the transmitting terminal.

Layering is a method for organizing communication protocols in well-defined encapsulated data units between otherwise de-coupled processing entities, i.e., layers. The protocol layers are implemented in both access terminals and access points. In accordance with the Open Systems Interconnection (OSI) model, protocol layer L1 provides for the transmission and reception of radio signals between the base station and remote station, layer L2 provides for the correct transmission and reception of signaling messages, and layer L3 provides for the control messaging for the communication system. Layer L3 originates and terminates signaling messages according to the semantics and timing of the communication protocol between access terminals and access points.

In an IS-856 communication system, the air interface signaling layer L1 is referred to as the Physical Layer, L2 is referred to as the Link Access Control (LAC) Layer or the Medium Access Control (MAC) Layer, and L3 is referred to as the Signaling Layer. Above the Signaling Layer are additional layers, which in accordance with the OSI model are numbered L4-L7 and are referred to as the Transportation, Session, Presentation and Application Layers. A physical layer ARQ is disclosed in U.S. Patent Serial No. 6,694,469, entitled "Method and Apparatus for Quick Re-transmission of Signals In A Communication System," issued February 17, 2004, assigned to the present assignee. An example of a link layer ARQ method is the Radio Link Protocol (RLP). RLP is a class of error control protocols known as not-acknowledge (NAK) based ARQ protocols. One such RLP is described in TIA/EIA/IS-707-A.8, entitled "DATA SERVICE OPTIONS FOR SPREAD SPECTRUM SYSTEMS: RADIO LINK PROTOCOL TYPE 2," hereinafter referred to as RLP2.

The transmissions of both the original and the re-transmitted packets may be opportunistic.

Reverse Link Transmission

The reverse link user data transmission from the legacy access terminals utilizes a code-division multiple access (CDMA), e.g., the CDMA in accordance with the IS-856 standard.

The new access terminals may utilize several multiple access methods of the reverse link channel in accordance with the options enabled by the communication system. First, the new access terminals may utilize the CDMA used by the legacy terminal, e.g. the CDMA in accordance with the IS-856 standard.

Additionally, the communication system may enable a reverse link operation designed primarily for a Time Division Multiple Access (TDMA). Such an operation is enabled by dividing the reverse link into intervals, and associating each of the intervals with a CDMA or a TDMA. The control entity in an access network, e.g., the access network controller 110, makes a decision, specifying an assignment of a sequence of the CDMA and TDMA intervals. The decision is made in accordance with a reverse link condition of the specific access terminal, the number and activity of legacy terminals, and other design criteria of the communication system. The reverse link condition may be ascertained in accordance with erasure rate of the DRC channel. The design criteria may comprise, e.g., a hand-off state of the specific access terminal, reverse link loading, and other criteria known to one skilled in the art. Clearly, the distribution may comprise only intervals associated with one of the multiple-access method.

The control entity in the access network then advises the access terminals about the assignment, by communicating the distribution to all access terminals of the access network. Alternatively, the assignment is communicated to new access terminals only. The assignment is communicated in periodic intervals, i.e., in a pre-determined portion of a forward link channel, e.g., every control channel cycle. Alternatively, the assignment is communicated to the access terminals only upon change by a broadcast message in a forward link channel, e.g., the control channel. The number of bits in the message (Indicator bits) is dependent on number of different sequences.

The new access terminals receive the assignment information and, if not given the choice to select between the CDMA and the TDMA operation autonomously, enter the multiple-access specified in the assignment information. If the access terminal is given a choice to select between the CDMA and the TDMA operation, the new access terminal autonomously makes the decision in accordance with design criteria of the communication system. Such criteria may comprise, e.g., power amplifier headroom, a forward link quality metric, a hand-off state of the new access terminal, reverse link quality metric, amount of data to be transmitted, impatience function value, QoS requirements and other known design criteria. Thus, for example, the new access terminals whose link-budget enables reverse link transmission at a rate of data above a threshold may utilize TDMA; otherwise, the new access terminals may utilize CDMA. Furthermore, a new access terminal able to utilize the TDMA, but having data packet size too small for high data rate, may select the CDMA. Additionally, the AT may select CDMA for low-latency applications.

**Reverse Link Channels**

As discussed above, the legacy access terminals operate in accordance with the IS-856 standard, consequently, the reverse link waveform for the legacy terminals is identical to the reverse link waveform of the IS-856 standard and is not described in detail herein.

Additionally, those of the new access terminals utilizing a code-division access, e.g., the CDMA in accordance with the IS-856 standard utilize the reverse link waveform identical to the reverse link waveform of the IS-856.

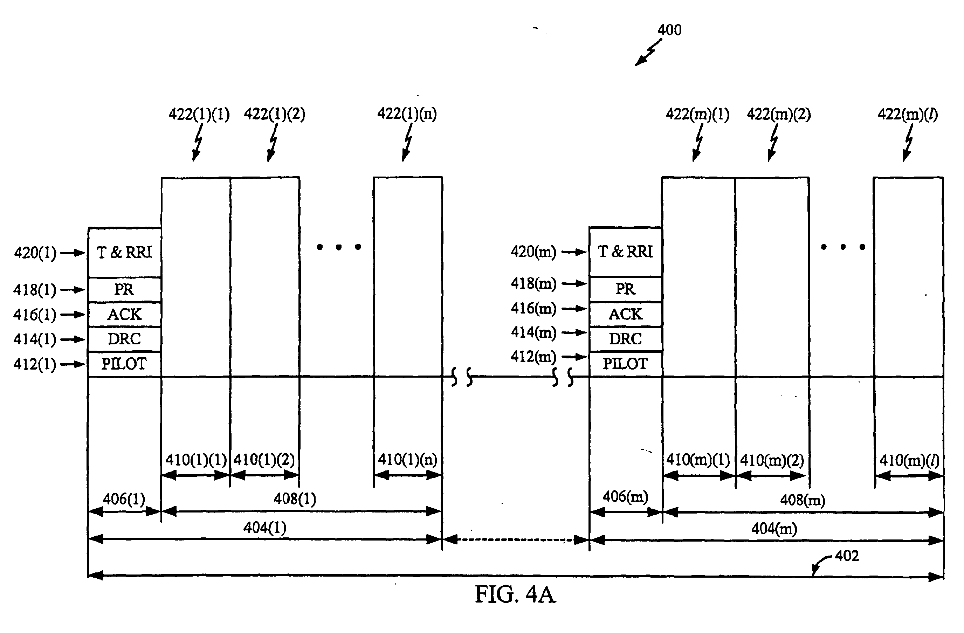

An exemplary reverse link waveform for the new access terminals operating in TDMA interval is illustrated in **FIGs. 4a-c**. It will be appreciated that the below described time durations, chip lengths, value ranges are given in a way of example only, and other time durations, chip lengths, value ranges may be used without departing from the underlying principles of operation of the communication system.

The reverse link **400** is defined in terms of intervals **402**. An interval is a structure comprising a pre-determined number of the slots **404**. As illustrated in **FIG. 4a**, the interval comprises m time-slots, however, the number of time-slots is a design decision; consequently, any number of slots may comprise an interval. Each time-slot **404(1),..., 404(m)** is divided into two portions **406, 408**. The first portion **406** comprises overhead channels **412-418,** and an optional traffic channel accompanied with additional overhead channel 420.

The reverse link overhead channels comprise: a Pilot Channel (PC) **412**, a Data Request channel (DRC) **414**, an Acknowledgement channel (ACK) **416**, a Packet Request channel (PR) **418**. Optionally, a traffic channel accompanied by a Reverse Rate Indication channel (RRI), collectively indicated by reference **420** may be also included in the first portion **406**.

The second portion **408** is further divided into sub-divisions 410, each sub-division **406** carrying a traffic channel and accompanying Reverse Rate Indication channel (RRI) **422** of an access terminal. As illustrated in **FIG. 4a**, there are *n* sub-divisions **410** in the second portion **408(1)** of the first time-slot **404(1);** consequently, *n* different access terminals may transmit in the second portion **408(1)** of the interval **404(1)**; there are *I* sub-divisions **410** in the second portion **408(m)** of the m-th time-slot **404(m)**; consequently, *I* different access terminals may transmit in the second portion **408(m)** of the interval **404(m)**. The access network in accordance with scheduler design may vary the number of sub-divisions **410**. One sub-division means that the whole second portion of the interval is used by one access terminal. The additional traffic channel and accompanying RRI channel provided in the sub-divisions **410** may utilize TDM, OFDM, CDM or any other multiplexing format.

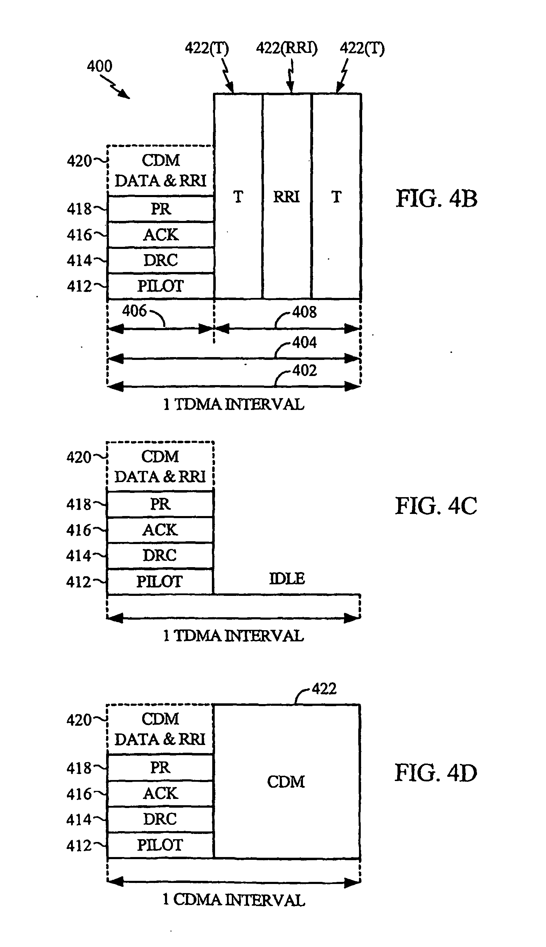

**FIG. 4b** illustrates a specific TDMA interval **402**. The TDMA interval comprises one time-slot **404**. The time-slot **404** is 2048 chips long, corresponding to a 1.66 ms. time-slot duration. Each time-slot **404** is divided into two portions **406, 408,** each portion being equal to half-time-slot. Because the second portion **408** is not further sub-divided, the second portion **408** corresponds to 1st sub-division **410**.

The overhead channels as described above are distinguished by different codes, e.g., by being covered by different Walsh codes, and organized in the first portion **406**. The optional traffic channel, accompanied by a Reverse Rate Indication channel (RRI), collectively indicated by reference **420** may be also included in the first portion **406**. The RRI is punctured into the traffic channel, and the resulting structure **420** is a distinguished from the overhead channels by different code, e.g., by being covered by different Walsh code. Consequently, the traffic channel and the RRI channel **420** are referred to as a CDM traffic channel, respective a CDM/RRI channel. Alternatively, (not shown) the RRI channel is not punctured into the CDM traffic. Consequently, the CDM traffic channel and the RRI channel are distinguished by each being covered by a by a unique code.

Additional traffic channel **422(T)** and accompanying Reverse Rate Indication channel (RRI) **422(RRI)** are provided in the second half-time-slot **408**. As illustrated in **FIG. 4b,** the traffic channel **422(T)** and accompanying RRI channel **422(RRI)** are time division multiplexed, and are referred to as a TDM traffic channel, respective a TDM/RRI channel.

Although not shown, the additional traffic channel and accompanying RRI channel provided in the second half-time-slot **408** may utilize OFDM, CDM or any other modulation format (not shown). Additionally, as described below, the additional traffic channel and accompanying RRI channel provided in the second half-time-slot **408** may utilize different multiplexing format, e.g., TDM and OFDM depending on rate of data.

**FIG. 4c** illustrates a reverse link waveform for access terminals operating in TDMA interval, but carrying no data in the second half-time-slot **408**. As illustrated, the overhead channels **412-418** and the optional CDM traffic channel/CDM RRI channel 420 are still transmitted during the first half-time-slot **406**, no energy is transmitted in the second half-time-slot **408**.

Consequently, to build user data into an interval designated for TDMA, the new access terminal may utilize three different protocols (modes) of multiplexing user data in such an interval:

- build user data into a first portion of the interval using a Code-division multiplexing (CDM);
- build user data into a second portion of the interval using a Time-division multiplexing (TDM) or Orthogonal Frequency Division Multiplexing (OFDM); and
- building user data into a first data portion of an interval using CDM and into a second portion of the interval using TDM/OFDM.

**FIG. 4d** illustrates a reverse link waveform for new access terminals operating in CDMA interval, and carrying CDM user data in both half-time-slots **406, 408**. As illustrated, the overhead channels **412-418** and the optional CDM traffic channel/CDM RRI channel **420** are transmitted during the first half-time-slot **406**. Additional CDM channel **422** is transmitted in the second half-time-slot **408.**

Although not shown in **FIG. 4d,** the new access terminal may utilize CDM traffic channel, i.e., to build user data into an interval designated for CDMA using CDM by:

- building user data into a first portion of the interval **406 ;**
- building user data into a first portion of the interval **408;** and
- building user data into both the first portion **406** and the second portion **408.**

The data transmitted in the CDM portion and the TDM/OFDM portion of the time-slot may contain data pertaining to the same information content, e.g., video. Additionally, a base video may be transmitted in the CDM portion of the time-slot and enhanced video in the TDM/OFDM portion of the time-slot; consequently, an acceptable video may still be received if the terminal cannot transmit during the second half of the time-slots. Alternatively, each half may contain data pertaining to different information content. Thus, e.g., voice data may be transmitted in the CDM portion of the time-slot and video may be transmitted in the TDM/OFDM portion of the time-slot.

**Pilot Channel**

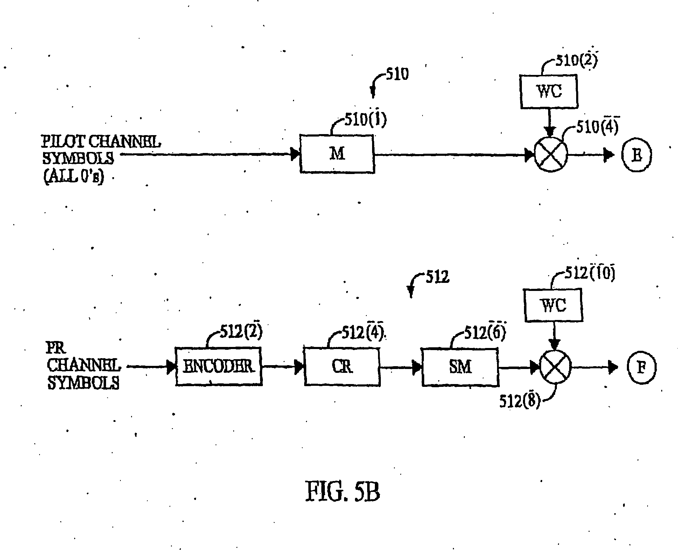

In one embodiment, the Pilot Channel **412** is used for estimation of a reverse link channel quality. Additionally, the Pilot Channel **412** is used for coherent demodulation of the channels transmitted in the first half-time-slot **406**. The Pilot Channel **412** comprises unmodulated symbols with a binary value of '0'. Referring to **FIG. 5b,** the unmodulated symbols are provided to a block **510(1),** which maps the binary symbols onto modulation symbols in accordance with the selected modulation. For example, when the selected modulation is binary shift phase keying (BPSK) the binary symbol value '0' is mapped on a modulation symbol value +1, and '1' binary symbol valued '1' is mapped on a modulation symbol value -1. The mapped symbols are covered with a Walsh function generated by a block **510(2),** in block **510(4).** The Walsh covered symbols are then provided for further processing.

**Data Request Channel**

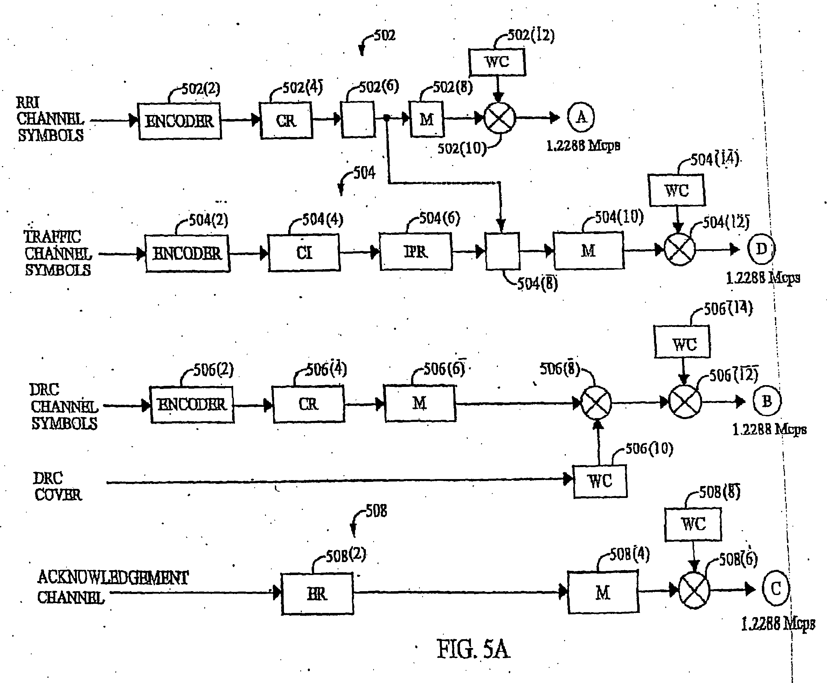

The Data Request Channel **414** is used by the access terminal to indicate to the access network the selected serving sector and the requested data rate on the Forward Traffic Channel. The requested Forward Traffic Channel data rate comprises, e.g., a four-bit DRC value. Referring to **FIG. 5a,** the DRC values are provided to a block **506(2),** which encodes the four-bit DRC value to yield bi-orthogonal code words. The DRC codeword is provided to a block 506(4), which repeats each of the codeword twice. The repeated codeword is provided to a block **506(6),** which maps the binary symbols onto modulation symbols in accordance with the selected modulation. The mapped symbols are provided to a block **506(8),** which covers each symbol with a code, e.g., a Walsh code generated by a block **506(10),** in accordance with a DRCCover identified by index i. Each resulting Walsh chip then provided to block **506(12),** where the Walsh chips are covered by a different code, e.g., a different Walsh code, generated by a block **506(14).** The Walsh covered symbols are then provided for further processing.

**ACK Channel**

The ACK channel **416** is used by the access terminal to inform the access network whether user data transmitted on the Forward Traffic Channel has been received successfully or not. The access terminal transmits an ACK channel bit in response to every Forward Traffic Channel interval that is associated with a detected preamble directed to the access terminal. The ACK channel bit is set to +1 (ACK) if a Forward Traffic Channel packet has been successfully received; otherwise, the ACK channel bit is set to -1 (NAK). A Forward Traffic Channel user data are considered successfully received if a CRC protecting the transmitted user data is identical to the CRC calculated from the decoded user data. Referring to **FIG. 5a,** the ACK channel bit is repeated in a block **508(2),** and provided to a block **508(4).** Block **508(4)** maps the binary symbols onto modulation symbols in accordance with the selected modulation. The mapped symbols are then provided to a block **508(6),** which covers each symbol with a Walsh code generated by block **508(8).** The Walsh covered symbols are then provided for further processing.

**Packet Ready Channel**

Each access terminal desiring to transmit indicates to the serving sector that user data are available for transmission in a future interval and/or that the future interval transmission is opportune. A interval is deemed to be opportune if an instantaneous quality metric of the reverse link channel interval exceeds the average quality metric of that reverse link channel modified by an opportunity level determined in accordance with additional factors, depending on a design of the communication system, exceeds a threshold.

The quality metric of the reverse link is determined in accordance with a reverse pilot channel, e.g., in accordance with an equation (1):

$$\frac{Filt\_TX\_Pilot(n)}{TX\_Pilot(n)} \quad (1)$$

where $Tx\_Pilot(n)$ is the power at which the pilot channel is transmitted during an n-th interval; and $Filt\_Tx\_Pilot(n)$ is the power of the filtered pilot signal filtered over the past k intervals evaluated in n-th interval. The filter time-constant, expressed in slots, is determined to provide adequate averaging of the reverse link channel.

Consequently, Equation (1) indicates how much better or worse the instantaneous reverse link is with respect to the average reverse link. The access terminal performs the *Tx_Pilot*(*n*) and *Filt_Tx_Pilot*(*n*) measurements, and the quality metrics calculation in accordance with Equation (1) at every interval. The calculated quality metric is then used to estimate quality metrics for a pre-determined number of intervals in the future. The pre-determined number of intervals may be two. A method for such quality estimation is described in detail in U.S. Patent Serial No. 6,807,426, entitled " Method and Apparatus for Scheduling Transmissions X Control in a Communication System," issued October 19, 2004, assigned to the present assignee.

The above-described method of estimating the reverse link quality metric is given by way of example only. Thus, other methods may be used. For example, the access terminals may provide an information about the pilot channel and the traffic channel transmit power levels to the access point that then uses this information to determine opportune transmit intervals.

The factors determining the opportunity level comprise, e.g., a maximum acceptable transmission delay t (from arrival of a packet at the access terminal to the packet transmission), a number of packets in the queue at the access terminal 1 (transmit queue length), and an average throughput over the reverse link th. The above-mentioned factors define an "impatience" function $I(t,l,th)$. The impatience function $I(t,l,th)$ is determined in accordance with the desired influence of the input parameters. For example, immediately following a first packet arrival for transmission to the access terminal's queue, the impatience function has a low value, but the value increases if the number of packets in the access terminal's queue exceeds a threshold. The impatience function reaches a maximum value when the maximum acceptable transmission delay is reached. Queue length parameter and transmit throughput parameter affect the impatience function similarly.

Use of the above-mentioned three parameters as inputs to the impatience function is given for the purposes of explanation only; any number or even different parameters may be used in accordance with design considerations of a communication system. Additionally, the impatience function may be different for different users, thus providing user differentiation. Furthermore, functions other than the impatience function may be used to differentiate among users. Thus, for example, each user may be assigned an attribute in accordance with the user's QoS. The attribute itself may serve in lieu of the impatience function. Alternatively, the attribute may be used to modify the input parameters of the impatience function.

The impatience function $I(t,l,th)$ may be used to modify the quality metric in accordance with equation (2):

$$\frac{Filt\_TX\_Pilot(n)}{TX\_Pilot(n)}.I(t,l,th) \qquad (2)$$

The relationship between the values calculated from Equation (2) and a threshold $T_J$ can be used to define opportunity levels. A set of suitable opportunity levels is given in **Table 1** as a way of example. It will be appreciated that different number and different definitions of opportunity levels may be used instead.

**Table 1**

| Opportunity Level | Definition |
| --- | --- |
| 0 | No Data to Transmit |
| 1 | Data available for transmission |
| 2 | Data available for transmission, channel condition "GOOD" OR Impatience to transmit "HIGH" |
| 3 | Data available for transmission, channel condition "VERY GOOD" OR Impatience to transmit "VERY HIGH" |

The appropriate opportunity level is encoded and transmitted over the PR channel. The PR channel is transmitted if an opportunity level other than 0, i.e., "no data to transmit" is to be indicated. The above-described four opportunity levels may be represented as two information bits. The PR channel needs to be received at an access point with a high reliability because any error during the PR channel reception may result in possible scheduling of an access terminal that has not requested user data transmission or reported low opportunity level. Alternatively, such an error can result in failure to schedule an access terminal that reported high opportunity level. Consequently, the two information bits need to be delivered with sufficient reliability.

As described above, the opportune transmit interval is implied because both the access point and the access terminal have knowledge of a pre-determined number of intervals in the future, for which the opportune level has been estimated. Because the timing of the access points and access terminals is synchronized, the access point is able to determine which interval is the opportune transmit interval for which the transmit terminal reported the opportunity level. However, it will be appreciated that other arrangements may be employed, in which the opportune transmit interval is variable, and is explicitly communicated to the access point.

The PR channel **418** value in accordance with the above-described concepts is expressed as a 2-bit value. Referring to **FIG. 5b**, The PR value is provided to a block **512(2),** which encodes the 2-bits to provide a codeword. The codeword is provided to a block **512(4)**, which repeats each of the codeword. The repeated codeword is provided to a block **512(6),** which maps the binary symbols onto modulation symbols in accordance with the selected modulation. The mapped symbols are then provided to a block 512(8), which covers each symbol with a Walsh code generated by block **512(10).**

### CDM Traffic Channel

The CDM Traffic Channel **420** is a packet-based, variable-rate channel. The user data packets for an access point are transmitted at rates of data selected from e.g., a set of rates of data 9.6, 19.2, 38.4, 76.8, and 153.6 kilo-bits per second (kbps).

Referring to **FIG. 5a,** the data to be transmitted (data bits) are divided into blocks of a pre-determined size, and provided to a block **504(2)**. The block **504(2)** may comprise a turbo-encoder. The output of the block **504(2)** comprises code symbols. The code symbols are interleaved by a block **504(4)**. In one embodiment, the block **504(4)** comprises a bit-reversal channel interleaver. Depending on the data rate and encoder code rate, the sequence of interleaved code symbols is repeated in block **504(6)** as many times as necessary to achieve a fixed modulation symbol rate, and provided to a block **504(8)**. Block **504(8)** is provided with the CDM RRI channel symbols, and punctures the CDM RRI channel symbols into the CDM Traffic Channel symbols. The punctured symbols are provided to a block **504(10)**, which maps the binary symbols onto modulation symbols in accordance with the selected modulation. The mapped symbols are then provided to a block **504(12)**, which covers each symbol with a Walsh code generated by block **504(14)**. The resulting chips are provided for further processing, described in details below. The CDM Traffic Channel/RRI Channel packets may be transmitted in one to multiple half-time-slots, depending on the user data-to-pilot ratio, the packet size, and a given data are determined.

### CDM Reverse Rate Indication Channel

The CDM RRI channel **420,** provides an indication of a reverse link packet type. The packet type indication provides the access point with information that assists the access point in determining if soft-decisions from a currently received packet can be soft-combined with the soft-decisions from previously received packet(s). Soft-combining takes advantage of values of energies at bit positions obtained from previously received and decoded packets (soft-decision values). An access point determines bit values (hard-decision) of a packet by comparing soft-decision values against a threshold. If an energy corresponding to a bit is greater than the threshold, the bit is assigned a first value, e.g., '1', otherwise the bit is assigned a second value, e.g., '0'. The access point then ascertains, whether the packet decoded correctly, e.g., by performing a CRC check, or by any other equivalent or suitable method following decoding of the packet. If such test fails, the packet is considered erased. However, the access point saves the soft-decision values (if the number of re-transmission attempts for the packet is less than a maximum allowed attempts), and when the access point acquires soft-decision values of the current packet, it can combine the saved soft-decision values with the soft-decision values of the current packet and compare the combined soft-decision values against the threshold.

Methods of combining are well known and, therefore, need not be described here. One suitable method is described in detail in a U.S. Patent No.: 6,101,168, entitled "Method and Apparatus for Time Efficient Re-transmission Using Symbol Accumulation," assigned to the present assignee.

However, in order to meaningfully soft-combine packets, the access terminal must know that the packets comprise information that may be combined as well as a method of combining. The set of RRI values is determined in accordance the method of combination. The RRI channel may be similar to the RRI channel in accordance with IS-856 standard. Referring to **FIG. 5a**, the RRI value represented, e.g., by 3 bits, is provided to a block **502(2)**, which encodes the 3-bits to provide a 7-bit codeword. An example of encoding is illustrated in **Table 2.**

**Table 2**

| RRI Symbol | RRI Codeword |
|---|---|
| 000 | 0000000 |
| 001 | 1010101 |

(continued)

| RRI Symbol | RRI Codeword |
|------------|--------------|
| 010 | 0110011 |
| 011 | 1100110 |
| 100 | 0001111 |
| 101 | 1011010 |
| 110 | 0111100 |
| 111 | 1101001 |

The codeword is provided to a block **502(4),** which repeats each of the codeword. The repeated codeword is provided to a block **502(6),** which provides the codeword to block **504(8)** for puncturing to the CDM traffic channel. The blocks **502(8), 502(10),** and **502(12)** are not utilized.

Alternatively, the codeword is provided to a block **502(4),** which repeats each of the codeword. The repeated codeword is provided to a block **502(6)**, which provides the codeword to block 502(8), which maps the binary symbols onto modulation symbols in accordance with the selected modulation. The mapped symbols are then provided to a block **502(10),** which covers each symbol with a Walsh code generated by block **502(12).** The resulting chips are provided for further processing, described in details below.

**TDM Traffic Channel**

The TDM Traffic Channel **422(RRI)** is a packet-based, variable-rate channel. The user data packets for an access point are transmitted at rates of data selected from e.g., a set of rates of data 76.8, 153.6, 230.4, 307.2, 460.8, 614.4, 921.6, 1228.8, and 1843.2 kbps. The data to be transmitted (data bits) are divided into blocks of a pre-determined size, and provided to a block **504(2).** The block **504(2)** may comprise a turbo-encoder with code rates 1/5. The output of the block **504(2)** comprises code symbols. The code symbols are interleaved by a block **504(4).** The block **504(4)** may comprise a bit-reversal channel interleaver. Depending on the data rate and encoder code rate, the sequence of interleaved code symbols is repeated in block **504(6)** as many times as necessary to achieve a fixed modulation symbol rate, and provided to a block **504(8).** Block **504(8)** passes the symbols to a block **504(10),** which maps the binary symbols onto modulation symbols in accordance with the selected modulation. The mapped symbols are then provided to a block **504(12),** which covers each symbol with a Walsh code generated by block **504(14),** and the resulting chips are provided for further processing, described in details below.

As part of the processing, the code symbols are transformed into modulation symbols. The TDM traffic channel modulation symbols are then time division multiplexed with the and the chips of the RRI channel. However, the size of the TDM channel does not necessarily match the size of the symbols resulting by combining the RRI channel chips and the TDM traffic channel modulation symbols representing a packet. Consequently, the chips representing the original packet symbols are divided into sub-packets, which are inserted into the TDM channel and transmitted. The method for transmission, an incremental redundancy, is described in a co-pending U.S. Patent Application Publication Serial No. 20030053435, entitled "ENHANCED CHANNEL INTERLEAVING FOR INCREASED DATA THROUGHPUT," published March 20, 2003 assigned to the present assignee.

The above-described sub-packet transmission is described in reference to **Table 3**, which illustrates the packet parameters. The rates of data and associated packet parameters are given as a means of an example, consequently, other rates of data and associated packet parameters are contemplated.

Table 3.

| Data Rate (kbps) | Data Bits | Code Symbols | Mod Type | Mod Symbols | RRI chips | Mod Symbols in a TDM channel |
|------------------|-----------|--------------|----------|-------------|-----------|------------------------------|
| 76.8 | 256 | 1280 | QPSK | 640 | 384 | 1280 |
| 153.6 | 512 | 2560 | QPSK | 1280 | 192 | 1664 |
| 230.4 | 768 | 3840 | QPSK | 1792 | 128 | 1792 |
| 307.2 | 1024 | 5120 | QPSK | 1856 | 96 | 1856 |
| 460.8 | 1536 | 7680 | QPSK | 1920 | 64 | 1920 |

(continued)

| Data Rate (kbps) | Data Bits | Code Symbols | Mod Type | Mod Symbols | RRI chips | Mod Symbols in a TDM channel |
|---|---|---|---|---|---|---|
| 614.4 | 2048 | 10240 | QPSK | 2560 | 64 | 1920 |
| 921.6 | 3072 | 15360 | 8-PSK | 3840 | 64 | 1920 |
| 1228.8 | 4096 | 20480 | 8-PSK | 5120 | 64 | 1920 |
| 1843.2 | 6144 | 30720 | 16-QAM | 7680 | 64 | 1920 |

Considering an rate of data of 1843.2 kbps, he data to be transmitted are divided into blocks of size of 6144 bits. Encoded by a code rate of 1/5 results into 6144 x 5 = 30720 code symbols. The modulation is 16-QAM, which means that each four code symbols result in one modulation symbols. So the 30720 code symbols result in 30720/4 = 7680 modulation symbols. Because the TDM channel comprises two half-time-slots, the TDM channel size is 1024 per slot. Because the number of RRI chips in a time-slot is 64, there is space for 2 x (1024 - 64) = 1920 modulation symbols in a TDM channel.

The first sub-packet is formed by inserting the first 1920 modulations symbols from the total 7680 modulation symbols into the a TDM channel. Because the sub-packet contains all the information necessary for recovery of the data bits of the packet, if the transmission is successful, i.e., the sub-packet decodes; the next packet is transmitted. If the transmission fails, the next sub-packet is formed. In one embodiment, the next sub-packet is formed by inserting the second 1920 modulations symbols from the total 7680 modulation symbols into the a TDM channel. This method is repeated until the data bits of the packet are successfully decoded, or a pre-determined number of sub-packets transmission or re-transmissions is reached.

To enable the access point soft-combine the sub-packets, transmitted by this incremental redundancy (HARQ) method, each sub-packet is assigned a sub-packet index. The sub-packed index is transmitted on a TDM Reverse Rate Indication Channel as described below.

The term sub-packet was used in the previous description for tutorial purposes, namely, to explain the concept of incremental redundancy. Because such differentiation is mainly semantic, the term packet will be used collectively, unless necessary for clear understanding.

## TDM Reverse Rate Indication Channel

The TDM RRI channel **422(RRI)** serves a similar purpose as the CDM.RRI. Consequently, the TDM RRI channel provides an indication of a reverse link packet type, e.g., (payload size, code rate, modulation, and the like), as well as a sub-packet index, which is used for the incremental redundancy (HARQ).

To provide the required indication, the RRI comprises 5 bits of information. Referring to **F1G. 5a**, the RRI value is provided to a block 502(2), which bi-orthogonally encodes the 5-bits to provide a codeword. The codeword is provided to a block 502(4), which repeats each of the codeword. The repeated codeword is provided to a block **502(6),** which maps the binary symbols onto modulation symbols in accordance with the selected modulation. The mapped symbols are further provided to a block 502(8), and then to block **502(10)** which covers each symbol with a Walsh code generated by block 502(12), and the resulting chips are provided for further processing, described in details below.

**Table 4** summarizes the RRI codeword values.

**Table 4**

| RRI Codeword Value | Packet Rate | Sub-packet Index |
|---|---|---|
| 0,1 | 76.8k | 1,2 |
| 2,3 | 153.6k | 1,2 |
| 4,5 | 230.4k | 1,2 |
| 6,7 | 307.2k | 1,2 |
| 8,9 | 460.8k | 1,2 |
| 10,11,12 | 614.4k | 1,2,3 |
| 13,14,15 | 921.6k | 1,2,3 |
| 16,17,18,19 | 1228.8k | 1,2,3,4 |

(continued)

| RRI Codeword Value | Packet Rate | Sub-packet Index |
|---|---|---|
| 20,21,22,23 | 1843.2k | 1,2,3,4 |

Referring to **Table 4,** when the access point receives and decodes RRI codeword with value '0', the access point attempts to decode the sub-packet with a rate of data 76.8 kbps. If the sub-packet fails to decode, the access point receives next packet and decodes RRI codeword with value '1', the access point may combine the current sub-packet with the previously received sub-packet, because the RRI codeword with value '1' identifies the currently received sub-packet with index '2', which may be combined with sub-packet with index '1'.

As discussed above, a pilot channel is a reference signal, i.e., parameters of the pilot signal, e.g., structure, transmission power, and other parameters are known at the access point. Upon receiving the pilot channel, the access point determines the parameters of the reverse pilot signal as affected by the communication link. By relating the two sets of parameters, i.e., the parameters upon transmission and the parameters as received, the access point may estimate the communication link and coherently demodulate the communication link's channels. Methods of using a reference signal for estimating communication link are known in the art. For reference see e.g., a co-pending U.S. Patent Application Serial No. 09/943,277, entitled "METHOD AND APPARATUS FOR MULTI-PATH ELIMINATION IN A WIRELESS COMMUNICATION SYSTEM," filed 08/30/01, assigned to the present assignee.

Referring to **FIG. 4a-b,** the reverse pilot channel, used for estimation of the reverse link and coherent demodulation of the channels transmitted in the first half-time-slot is not available in the second half-time-slot. However, the relatively high transmission power and elaborate encoding assures that the probability of reception and correct decoding of the RRI channel is high. Furthermore, both the access terminal and the access point are provided by the information summarized in **Table 4.**

Therefore, the access point may construct hypothesis of what rate of data and what RRI codeword was transmitted, and attempts to decode the RRI by trying the hypothesis. The access selects the hypothesis, which is most likely in accordance to the metric used for the hypothesis testing. As discussed below, reverse pilot channel is transmitted with a power determined by the power control loops so that the reverse pilot channel from all access terminals is received at the access point with the same power ($P_{Pilot}$). Because the RRI channel power ($P_t$) is related to the reverse link transmission power (see Equation (3) below), once the RRI channel is correctly decoded, the access point may use Equation (3) to determine the parameters of the RRI channel necessary for estimating the reverse link channel quality. Consequently, the RRI channel may be used as a reference signal in lieu of the pilot channel for estimation of a reverse link channel quality and coherent demodulation of the channels transmitted in the second half-time-slot.

To properly use Equation (3) the access point needs to know the value of A, a rise over thermal (ROT) differential between the overhead and traffic transmission intervals. As further discussed below, the access point measures the value of A.

Although the CDM Traffic Channel/CDM RRI channel were described as using the same structure generating the TDM Traffic channel and the TDM RRI Channel, this need not be the case, there may be separate structures for the CDM Traffic Channel, CDM RRI channel and TDM Traffic channel and the TDM RRI Channel.

## OFDM Reverse Traffic channel

As discussed, transmission of a rate of data depends on characteristics of a communication channel, e.g. a signal-to-interference-and-noise-ratio (SINR); higher rates of data requiring higher SINR. Because multipath interference is a significant contributor to interference-and-noise, mitigation of interference at higher rates of data would significantly improve performance of the communication system.

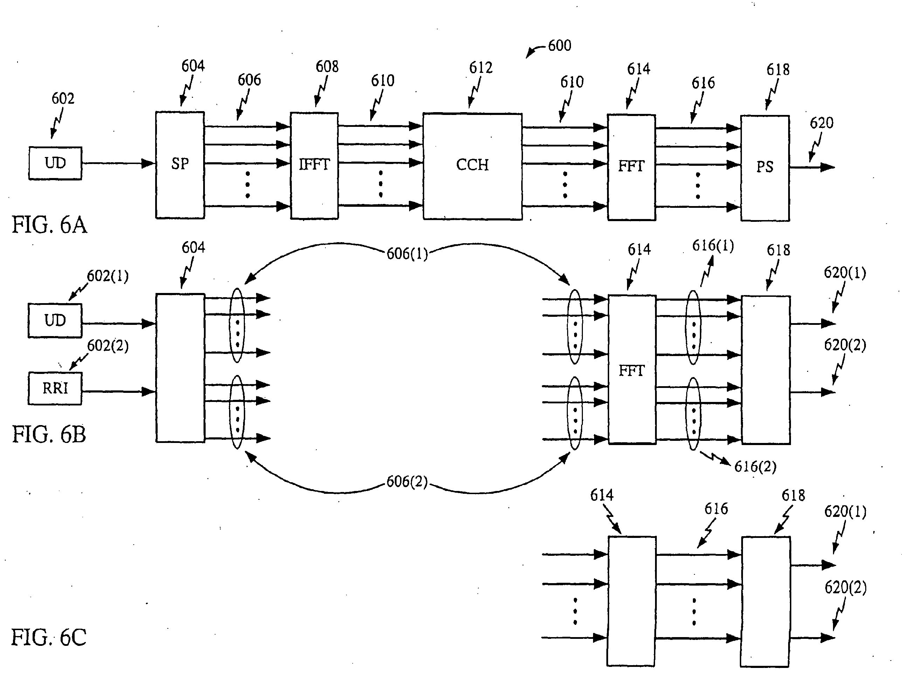

One means for multipath interference mitigation is Orthogonal Frequency Division Modulation (OFDM). OFDM is known modulation method, fundamentals of which are explained in reference to **FIG. 6**. An OFDM communication system **600** takes a user data **602** and provides them to block **604.** (The pre-processing of user data before block **604,** i.e., encoding, repeating, interleaving, and the like, are not shown for brevity purposes.) Block **604** distributes the user data among many parallel bins **606**, the exact number being a function of the used Fast Fourier Transform (FFT) size. The parallel bins **606** are modulated in block **608** by an inverse FFT (IFFT). This modulated signal, comprising a bank of signals whose number is equal to the number of parallel bins, is then upconverted to a set of radio frequency sub-carriers **610,** amplified and transited over a communication channel **612**. The signal is received and demodulated in block **614** using the FFT. The demodulated data **616** are then re-distributed by block **618** to user data **620.**

The user data are protected from multipath-induced frequency selective fading. If a sub-carrier experiences a fade, the user data lost are only a small portion of the aggregate user data. Because the transmitted user data contain error correction bits, the missing pieces may subsequently be recovered.

The above-described OFDM may be utilized for transmission in the second half of the TDM interval as follows. When the access terminal determines that a rate of user data to be transmitted over the reverse link is above a predetermined rate of data, e.g, above 614.4 kbps, the access terminal transmits the user data utilizing the OFDM instead of the TDM.

**OFDM Reverse Rate Indicator Channel**

To provide the required indication, the OFDM RRI may comprise 5 bits of information. The RRI vale **602(2)** is provided separately from user data **602(1)** to a block **604** (of **FIG. 6A),** which distributes the RRI data to at least one pre-determined parallel bin **606(2),** and which distributes the user data on the remaining parallel bins **606(1).** (The pre-processing of user data and RRI date before block **604,** i.e., encoding, repeating, interleaving, and the like, are not shown for brevity purposes.) Further processing proceeds as described in **FIG. 6a**. Referring back to **FIG. 6b**, upon reception, the signal is received and demodulated in block **614** using the FFT. The demodulated RRI data **616(2)** and the demodulated user data **616(2)** are then re-distributed by block **618** to provide user **620(1)** and RRI value **620(2).**

Alternatively, the user data and the RRI data are multiplexed and provided to the block **604** (of **FIG. 6b**). (The pre-processing of user data before block **604,** i.e., encoding, repeating, interleaving; and the like, are not shown for brevity purposes.) Consequently, the RRI values, as well as the user data are distributed among the parallel bins **606.** Further processing proceeds as described in **FIG. 6a.** Referring to **FIG. 6c,** upon reception, the signal is received and demodulated in block **614** using the FFT. The demodulated RRI data and the demodulated user data **616** are then re-distributed by block **618** to provide user **620(1)** and RRI value **620(2).**

**Reverse Link Architecture**

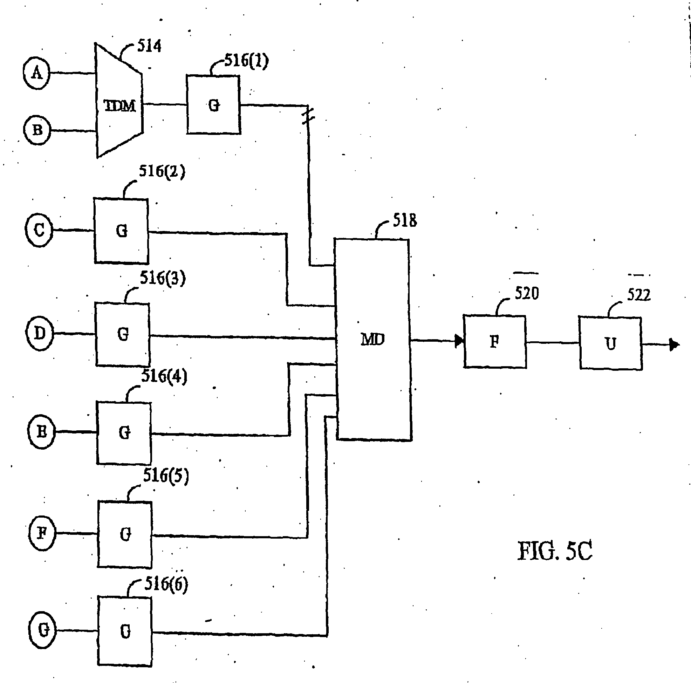

**FIG. 5c** further illustrates the reverse link channels' architecture. The TDM Traffic Channel **422(T),** and the TDM RRI channel **422(RRI)** (of **FIG. 4)** are time division multiplexed in block **514,** and provided to gain adjustment block **516(1).** After the gain adjustment, the time division multiplexed signal is provided to a modulator **518.**

The Pilot Channel **412,** the Data Request channel **414**, the Acknowledgement channel **416,** the Packet Request channel 418 (of **FIG. 4**), are provided to the respective gain adjustment blocks **516(2)-516(5).** After the gain adjustment, the respective channels are provided to the modulator **518.**

Additionally, the optional CDM traffic channel/CDM RRI channel **420** (of **FIG. 4**) are provided to a gain adjustment blocks **516(7).** After the gain adjustment, the respective channels are provided to the modulator **518.**

The modulator **518** combines the incoming channel signals, and modulates the combined channel signals in accordance with an appropriate modulation method, e.g., a binary phase-shift keying (BPSK), a quadrature phase-shift keying (QPSK), quadrature amplitude modulation (QAM), 8-phase-shit keying (8-PSK), and other modulation methods known to one of ordinary skill in the art. The appropriate modulation method may change in accordance with a rate of data to be transmitted, channel condition, and/or other design parameter of the communication system. The combining of the incoming channel signals will change accordingly. For example, when a selected modulation method is QPSK, the incoming channel signals will be combined onto an In-phase and Quadrature signals, and these signals will be are quadrature spread. The selection of channel signals are combined on the In-phase and Quadrature signals in accordance with design parameter of the communication system, for example distributing the channels so that the data load between the In-phase and Quadrature signals is balanced, the resulting waveform peak-to-average is lowered, and other design parameters.

The modulated signal is the filtered in block **520,** upconverted to a carrier frequency in block **522,** and provided for transmission.

**Reverse Link Access Method**

As discussed, the reverse link user data transmissions from the legacy access terminals utilize a code-division multiplex, e.g., the CDMA in accordance with the IS-856 standard. In accordance with the IS-856 standard, the access terminals may access the carrier frequency of the reverse link, therefore, initiate reverse link transmission autonomously, disregarding any potential reverse link distribution between TDMA and CDMA intervals. The initial reverse link transmission occurs at a pre-determined rate of data, e.g., 9.6 kbps. When a reverse activity bit (RAB) received over a Reverse Activity Channel is zero, the access terminal may increase rate to the next higher rate with probability p; when the RAB is one, the access terminal may decrease rate to the next lower rate with probability q. The probabilities p and q for each rate are either transmitted from an access network to an access terminal or are negotiated between an access point and access terminal, e.g., upon connection.

Consequently, the new access terminals utilizing a code-division multiplex, e.g., the CDMA in accordance with the IS-856 standard may initiate reverse link transmission autonomously, disregarding any potential reverse link distribution between TDMA and CDMA intervals, as described above.

The new access terminals utilizing a CDMA designated interval modulation may initiate reverse link transmission in the CDMA designated interval autonomously as described above.

The reverse link transmissions from the new access terminals utilizing a TDMA designated interval occur from at least one of the access terminals in a portion of a reverse link interval. To illustrate how the one time-slot interval structure described above may be extended to a multi time-slot interval, the reverse link data transmission as described below uses an interval equal to two time-slots. However, as mentioned above, any number of time-slots may be used to construct the interval. The access to the carrier frequency of the reverse link for the new access terminals utilizing the TDMA designated interval depends on the mode of data multiplexing.

Those of the new access terminals utilizing the CDM only mode, i.e., transmitting user data using only CDM in the TDMA interval may access the carrier frequency of the reverse link, therefore, initiate reverse link transmission autonomously, as described above.

In contrast, access to the carrier frequency of the reverse link, therefore, the reverse link transmission for the new access terminals utilizing a TDM/OFDM or a CDM and TDM/OFDM mode, i.e., transmitting user data using TDM/OFDM or a CDM and TDM/OFDM in the TDMA interval is scheduled by an entity in an access network in response to the access terminals' request to convey the user data. The access terminal is scheduled in accordance with the quality metric of the access terminal's channel in the interval on the reverse link, the access terminal's average reverse link quality metric, and an impatience function. If a new access terminal is not scheduled, i.e., the access terminal is denied a permission to transmit; the access terminal must suppress transmission in at least the TDM/OFDM portion of the interval. Thus, the access terminals either transmit no data in the interval or transmit data only in the CDM portion of the interval, i.e., utilizing the CDM portion of the TDMA interval.

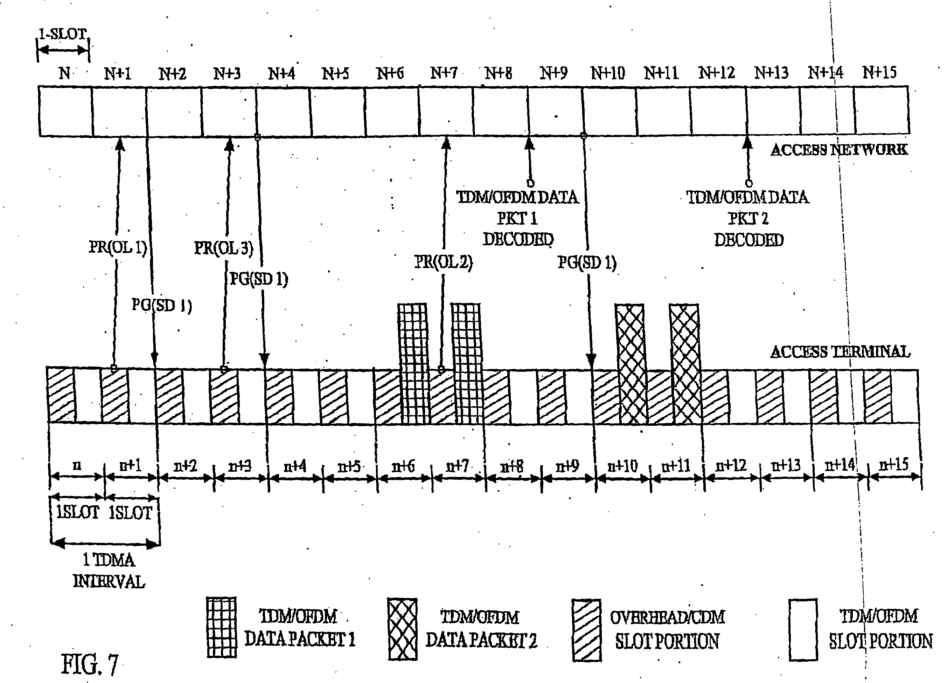

One example of the reverse link data transmission for an access terminal requesting TDMA is shown, and will be explained with reference to **FIG. 7. FIG. 7** illustrates reverse link data transmission negotiation for one access terminal, for the sake of understanding only. Furthermore, only the serving access point is shown. However, it is understood that, as described above, the concept may be extended to multiple access terminals. Additionally, multiple access points of the access network may receive and decode the reverse link from the transmitting access terminal and provide information whether or not the user data were successfully decoded to the serving access point. Alternatively, the access points that received the payload information send the payload information to centralized entity to perform soft-decision decoding. The central decoder then notifies the serving access point whether the payload decoding was successful. The serving access point indicates an ACK over the PG channel, thus preventing unnecessary re-transmission.

Because the access procedure, serving sector selection, and other call setup procedures are based on the like functions of the communication system in accordance with the IS-856 standard as described above, they are not repeated. The only difference is that the new access terminals do not transmit the access channel probes during the TDM/OFDM half-time-slot.

The access terminal (not shown) having received data to be transmitted and wishing to transmit in the TDMA interval, evaluates the access terminal's reverse link quality metric and impatience function for the TDMA interval, and generates an opportunity level (OL 1). For the sake of understanding only, it is assumed that all intervals are designated as TDMA. The Access Terminal estimates the data rate at which it can transmit and generates the data type accordingly. As discussed, the packet data type not only indicates the date rate but also designates the packet as original or re-transmitted. As described in more detail below, the rate determination method determines maximum supportable rate in accordance with an amount of data to be transmitted, the access terminal's maximum transmit power and transmit power allocated to a pilot channel. The access terminal then determines, whether rules for transmitting a next value in packet ready channel are satisfied. The rules may comprise:

- a next value in a packet ready channel is transmitted over an interval, e.g., two time-slots;
- a next value in the packet ready channel is transmitted upon change in the opportunity level;
- a next value in the packet ready channel is transmitted even if the opportunity level does not change if no packet grant has been received for a pre-determined time interval; and
- no packet ready channel is transmitted if the access terminal has no data to transmit

When the rules are satisfied, the access terminal communicates the requested data rate and the opportunity level over the PR channel over the time-slots n and n+1.

A serving access point (not shown) of the access network receives the reverse link and decodes the information contained in time-slots n and n+1 in slot N+1. The serving access point then provides the opportunity level, the packet data type, and the requested data rate of all access terminals requesting permission to transmit data to a scheduler (not shown). The scheduler schedules packets for transmissions in accordance with scheduling rules. As discussed, the scheduling rules attempt to minimize mutual reverse link interference among access terminals while achieving the required QoS or data distribution fairness. The rules are as follows:

i. precedence to transmit is given to the access terminal reporting the highest opportunity level;
ii. in the event that several access terminals report identical opportunity level, precedence is given to the access terminal with lower transmitted throughput;
iii. in the event that several access terminals satisfy rules (i) and (ii) the access terminal is selected at random; and
iv. a permission to transmit is given to one of the access terminals with data available for transmission even if the reported opportunity level is low in order to maximize reverse link utilization.

After having made scheduling decision, the serving access point transmits the scheduling decision for each of the access terminals requesting permission to transmit on the PG channel. As illustrated, the serving access point sent a scheduling decision (SD 0), denying the access terminal permission to transmit a new packet in slots N+2 and N+3.

Because the access terminal did not receive any response to the PR channel, and the access terminal has data to be transmitted, the access terminal again evaluates the access terminal's reverse link quality metric and impatience function, which this time results in an increased opportunity level (OL 3). The access terminal further generates the packet data type and estimates the data rate, and provides the packet data type and the requested data rate over a RRI channel, and the opportunity level over the PR channel of the reverse link in time-slots n+2 and n+3.

The serving access point receives the reverse link and decodes the information contained in time-slots n+2 and n+3 in slot N+3. The serving access point then provides the opportunity level, the packet data type, and the requested data rate of all access terminals requesting permission to transmit data to the scheduler. After having made scheduling decision, the serving access point transmits the scheduling decision for each of the access terminals requesting permission to transmit on the PG channel. As shown the serving access point transmits a scheduling decision (SD 1) permitting new packet transmission in time-slots N+4 and N+5.

The access terminal receives the PG channel and decodes the scheduling decision (SD 0) transmitted in time-slots N+2 and N+3 in time-slot n+3. The Access Terminal therefore abstains from transmitting during time-slots n+4 and n+5. The access terminal has data to be transmitted, consequently, the access terminal evaluates the access terminal's reverse link quality metric and impatience function. As illustrated, the access terminal determined an opportunity level (OL 3), which is the same as in the two slots prior to this transmission, consequently, the access terminal abstains from transmitting PR channel in time-slot n+4 and n+5.

The serving access point makes a scheduling decision (SD 1) to allow the access terminal to transmit, consequently, the serving access point transmits the scheduling decision for each of the access terminals requesting permission to transmit on the PG channel. As shown, the serving access point transmits a scheduling decision (SD 1) permitting new packet transmission in time-slots N+4 and N+5

The access terminal receives the PG channel and decodes the scheduling decision (SD 1) transmitted in time-slots N+4 and N+5 in time-slot n+5. In addition to the data transmitted in slots n+6 and n+7, the access terminal has data to be transmitted, consequently, the access terminal evaluates the access terminal's reverse link quality metric and impatience function. As illustrated, the access terminal determined an opportunity level (OL 2), consequently, the access terminal transmits PR channel in time-slot n+6 and n+7. Because the access terminal was permitted to transmit, the access terminal further transmits the user data in the TDM/OFDM portions of the reverse link traffic channel in the time-slots n+6 and n+7.

As illustrated in **FIG. 7,** the access terminal received the permission to transmit after two requests. Each of the packet requests may have been associated with the same packet or with different packets. If each of the packet requests have been associated with different packets, in one embodiment, the access terminal autonomously decides, which packet to sent. Alternatively, the permission to transmit is associated with the first non-granted packet requests. However, other strategies are fully within the scope of the invention.

The serving access point receives the reverse link and decodes the PR channel information contained in time-slots n+6 and n+7 in slot N+7, and the user data contained in time-slots n+6 and n+7 in time-slots N+8 and N+9. The serving access point then provides the opportunity level, the packet data type, and the requested data rate of all access terminals requesting permission to transmit data to the scheduler. After having made scheduling decision, the serving access point transmits the scheduling decision for each of the access terminals requesting permission to transmit on the PG channel. Because the access point successfully decoded the user data, the serving access point transmits a scheduling decision (SD 1) permitting new packet transmission in time-slots N+10 and N+11.

The access terminal did not send a PR in time-slots n+8 and n+9 nor in time-slots n+10 and n+11 because, upon the access terminal's evaluation of reverse link quality metric and impatience function, rules for transmitting a next value in packet ready channel were not satisfied.

The access terminal receives the PG channel and decodes the scheduling decision SD 1 in slot n+11. Because the access terminal was permitted to transmit, the access terminal further transmits the user data in the TDM/OFDM portions of the opportune time-slots n+12 and n+13.

The serving access point receives the reverse link and decodes the user data contained in time-slots n+12 and n+13 in time-slots N+14 and N+15. Because the access point successfully decoded the user data, but the serving access point has no outstanding packet request, the access point does not transmit a PG.

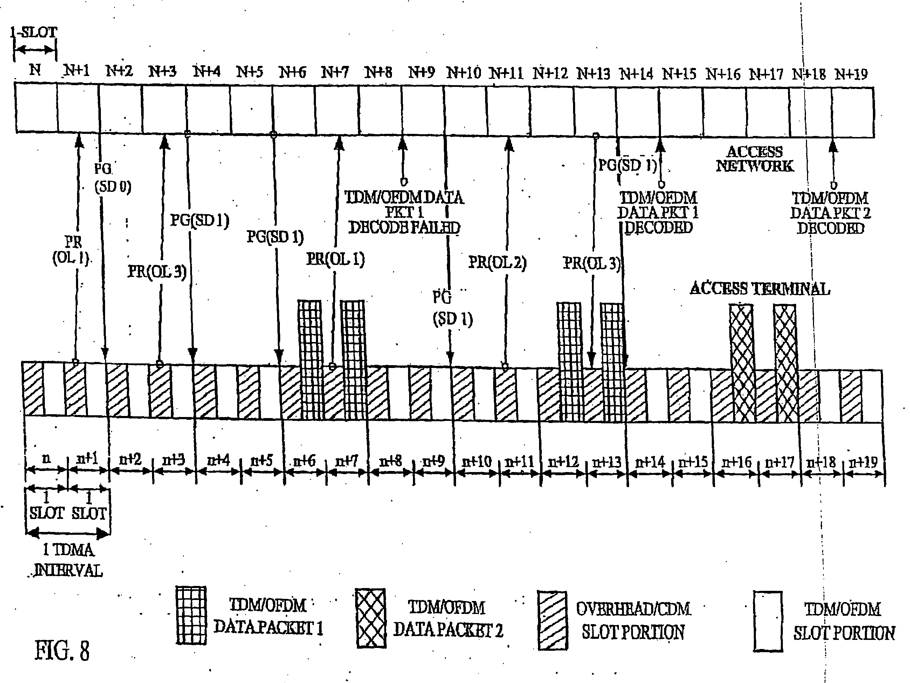

The case for the access network failing to correctly decode the payload send over the reverse link in slot n+6 and n+7 is illustrated in **FIG. 8.**

The serving access point receives the reverse link and decodes the PR channel information contained in time-slots n+6 and n+7 in slot N+7, and the user data contained in time-slots n+6 and n+7 in time-slots N+8 and N+9. The serving access point then provides the opportunity level, the packet data type, and the requested data rate of all access terminals requesting permission to transmit data to the scheduler. After having made scheduling decision, the serving access point transmits the scheduling decision for each of the access terminals requesting permission to transmit on the PG channel. Because the access point failed to successfully decode the user data, the serving access point transmits a scheduling decision (SD -1) permitting previously transmitted packet re-transmission in time-slots N+10 and N+11.

The access terminal did not send a PR in time-slots n+8 and n+9 because, upon the access terminal's evaluation of reverse link quality metric and impatience function, rules for transmitting a next value in packet ready channel were not satisfied. However, access terminal sent a PR in time-slots n+10 and n+11 because upon the access terminal's evaluation of reverse link quality metric and impatience function, the opportunity level has changed.

The access terminal receives the PG channel and decodes the scheduling decision SD -1 sent in time-slots N+10 and N+11 in time-slot n+11. Because the access terminal was permitted to re-transmit the previously transmitted packet and not the new packet, the access terminal has data to be transmitted, consequently, the access terminal evaluates the access terminal's reverse link quality metric and impatience function. As illustrated, the access terminal determined an opportunity level (OL 3), consequently, the access terminal transmit PR channel in time-slot n+12 and n+13. Furthermore, the access terminal re-transmits the user data in the TDM/OFDM portions of the opportune time-slots n+12 and n+13.

The serving access point receives the reverse link and decodes the PR channel information contained in time-slots n+12 and n+13 in slot N+13, and the user data contained in time-slots n+12 and n+13 in time-slots N+14 and N+15. The serving access point then provides the opportunity level, the packet data type, and the requested data rate of all access terminals requesting permission to transmit data to the scheduler. After having made scheduling decision, the serving access point transmits the scheduling decision for each of the access terminals requesting permission to transmit on the PG channel. Because the access point successfully decoded the user data, the serving access point transmits a scheduling decision (SD 1) permitting new packet transmission in time-slots N+14 and N+15.

The access terminal receives the PG channel and decodes the scheduling decision SD 1 in slot n+15. Because the access terminal was permitted to transmit, the access terminal further transmits the user data in the TDM/OFDM portions of the opportune time-slots n+16 and n+17.

The serving access point receives the reverse link and decodes the user data contained in time-slots n+16 and n+18 in time-slots N+18 and N+19. Because the access point successfully decoded the user data, but the serving access point has no outstanding packet request, the access point does not transmit a PG.

It will be appreciated that the serving access point may schedule an access terminal in accordance with their latest received request for transmission.

It will be appreciated that the access network may fail to receive PR channel. Since the access terminal does not re-transmit the PR channel until an opportunity level changes, to prevent the failure in communication, the access terminal re-transmits the PR channel after a pre-determined amount of time.

It will be appreciated that the packet access network may fail to receive packet even upon several re-transmission attempts. To prevent excessive re-transmission attempts, the communication system may give up re-transmission attempts after a determined number of re-transmission attempts (persistence interval). The missing packet is then handled by a different method, e.g., a radio link protocol (RLP).

**Reverse Link Power Control**

As discussed, at least one access terminal in a sector is transmitting data traffic on the reverse link using TDMA. Because in the CDMA communication system all terminals are transmitting on the same frequency, each transmitting access terminal acts as a source of interference to the access terminals in adjacent sectors. To minimize such an interference on the reverse link and maximize capacity, the transmit power of the pilot channel for each access terminal is controlled by two power control loops. The transmit power of the remaining overhead channels and the CDM traffic channel is then determined as a fraction of the transmit power of the pilot channel. The transmit power of the TDM traffic channel is determined as a traffic-to-pilot power ratio for a given data rate, corrected by a rise over thermal differential between the overhead and traffic transmission intervals. Rise over thermal is a difference between a receiver noise floor and a total received power as measured by the access terminal.

**Pilot Channel Power Control**

The pilot channel power control loops are similar to that of the CDMA system disclosed in detail in U.S. Patent No. 5,056,109, entitled "METHOD AND APPARATUS FOR CONTROLLING TRANSMISSION POWER IN A CDMA CELLULAR MOBILE TELEPHONE SYSTEM," assigned to the assignee of the present invention. Other power control methods are also contemplated and are within the scope of the present invention.

The first power control loop (outer loop), adjusts a set point so that a desired level of performance, as evaluated at the sector receiving the reverse link with the best quality metric, is maintained. The level of performance comprises e.g., a DRC channel erasure rate and CDM Traffic channel packet error rate (PER). The set point is updated in accordance with rules that may be as follows:

> set point is decreased if DRC erasure rate is less than a threshold, e.g., 25%, and a CDM packet was decoded successfully, provided that the CDM-RRI was successfully detected;
> set point is increased if DRC erasure rate is greater than the threshold or CDM packet was not successfully decoded, provided that the CDM RRI was successfully detected.

The set point is updated periodically every pre-determined number of frames following selection diversity at the access points. The DRC erasure rate is measured over that interval. If no CDM traffic channel is received within the update interval, the set point is updated in accordance with the DRC erasure rate only. If the pre-determined number of frames is greater than one frame, set point is updated at either the update interval or failure to successfully decoded CDM packet, provided that the CDM RRI was successfully detected.

The second power control loop (inner loop) adjusts the transmit power of the access terminal so that the reverse link quality metric is maintained at the set point. The quality metric comprises an energy-per-chip-to-noise-plus-interference ratio (Ecp/Nt), and is measured at the access point receiving the reverse link. Consequently, the set point is also measured in Ecp/Nt. The access point compares the measured Ecp/Nt with the power control set point. If the measured Ecp/Nt is greater than the set point, the access point transmits a power control message to the access terminal to decrease the access terminal's transmit power. Alternatively, if the measured Ecp/Nt is below the set point, the access point transmits a power control message to the access terminal to increase the access terminal's transmit power. The power control message is implemented with one power control bit. A first value for the power control bit ("up") commands the access terminal to increase the access terminal's transmit power and a low value ("down") commands access terminal to decrease the access terminal's transmit power. The access terminal receiving the power control bits from multiple sectors decreases transmit power if one of the power control commands is "down," and increases transmit power otherwise.

The power control bits for all access terminals in communication with each access point are transmitted on the MAC channels of the forward link.

**Remaining Overhead Channels and CDM Traffic Channel Power Control**

Once the transmit power of the pilot channel for a time-slot is determined by the operation of the power control loops, the transmit power of each of the remaining overhead channels and the CDM traffic channel are determined as a ratio of the transmit power of the specific overhead and CDM channel to the transmit power of the pilot channel. The ratios for each overhead and CDM channel are determined in accordance with simulations, laboratory experiments, field trials and other engineering methods known to one of ordinary skills in the art.

Thus for example the power of the CDM Traffic Channel/RRI Channel relative to that of the Pilot Channel for the Reverse Traffic Channel depends on the data rate as shown in Table 5.

**Table 5.**

| Data Rate (kbps) | Data Channel Gain Relative to Pilot (dB) |
|---|---|
| 0 | -∞ (Data Channel Is Not Transmitted) |
| 9.6 | DataOffsetNom + DataOffset9k6 + 3.75 |
| 19.2 | DataOffsetNom + DataOffset19k2 + 6.75 |
| 38.4 | DataOffsetNom + DataOffset38k4 + 9.75 |
| 76.8 | DataOffsetNom + DataOffset76k8 + 13.25 |
| 153.6 | DataOffsetNom + DataOffset153k6 + 18.5 |

**TDM Traffic Channel Power Control**

The required transmit power of the traffic channel is also determined in accordance with the transmit power of the pilot channel. In one embodiment, the required traffic channel power is computed using the following formula:

$$P_t = P_{pilot} . G(r) . A \qquad (3)$$

where: $P_t$ is the transmit power of the traffic channel;
$P_{pilot}$ is the transmit power of the pilot channel;
$G(r)$ is a traffic-to-pilot transmit power ratio for a given data rate $r$; and
$A$ is an estimated rise over thermal (ROT) differential between the overhead and traffic transmission intervals. The term "rise over thermal" is used herein to mean a difference between a noise floor and a total received power as measured by the access terminal.

The measurement of the ROT in the overhead transmission interval (ROToverhead) and the traffic (ROTtraffic) transmission interval, needed for calculation of A at the access point is well known in the art. Such a measurement is described in disclosed in U.S. Patent No. 6,192,249 entitled "Method and apparatus for reverse link loading estimation," assigned to the assignee of the present invention. Once the noise in both the overhead and traffic transmission intervals are measured, the A is computed using the following formula:

$$A = ROT_{traffic} - ROT_{overheadt} \qquad (4)$$

The computed value of $A$ is then transmitted to the access point, e.g. over the legacy RA channel if only access terminals operating using TDMA are present in the communication system or over the new RA channel if both legacy and new access terminals are operating in the communication system.
Alternatively, the value of A represents an estimate of the ROT differential given by Equation (3). An initial value of A is determined in accordance with in accordance with simulations, laboratory experiments, field trials and other engineering methods known to one of ordinary skills in the art. The value of A is then adjusted in accordance with the reverse link packet error rate (PER) so that a determined PER is maintained in a maximum allowed number of transmissions of a given packet. The reverse link packet error rate is determined in accordance with ACK/NACK of the reverse link packets as described above. In one embodiment, the value of A is increased by a first determined amount if an ACK has been received within N re-transmission attempts of the maximum M re-transmission attempts. Similarly, the value of A is decreased by a second determined amount if an ACK has not been received within N re-transmission attempts of the maximum M re-transmission attempts.
From Equation (3) follows that the traffic channel transmit power is a function of the data rate r. Additionally, an access terminal is constrained in maximum amount of transmit power ($P_{max}$). Therefore, the access terminal initially determines how much power is available from the $P_{max}$ and the determined $P_{pilot}$. The access terminal then determines the amount of data to be transmitted, and selects the data rate $r$ in accordance with the available power and the amount of data. The access terminal then evaluates Equation (3) to determine, whether the effect of the estimated noise differential A did not result in exceeding the maximum available power. If the maximum available transmit power is exceeded, the access terminal decreases the data rate r and repeats the process.
The access point can control the maximum data rate that an access terminal can transmit by providing the access terminal with a maximum allowed value $G(r).A$ via the legacy RA channel if only access terminals operating in TDMA are present in the communication system or over the new RA channel if both legacy and new access terminals are operating in the communication system.
Alternatively, the AT determines the value of $G(r).A$ in accordance with traffic-to-pilot power ratio and the estimate of A adjusted in accordance with the reverse link packet error rate (PER) determined in accordance with ACK/ NACK as described above.

**Packet Decoding Modification**

The above-introduced traffic-to-pilot transmit power ratio $G(r)$ for a given data rate $r$ is determined by taking into account number of (re)transmissions of a packet for correct packet decoding. Therefore, if the packet is to be correctly decoded with one transmission, the traffic-to-pilot transmit power ratio is greater than the traffic-to-pilot transmit power ratio if one or more transmissions are allowed.

The number of (re)transmissions determines latency, which affects a quality of service (QoS). Because different types of packets, e.g., voice packet, file transfer protocol packet, and the like, require a different QoS, the different types of packets may be assigned different traffic-to-pilot transmit power ratios. Thus, for example, when an access terminal determines that a voice packet, requiring a certain QoS (low latency), is to be transmitted, the access terminal utilizes a first traffic-to-pilot transmit power ratio, which is greater than a second traffic-to-pilot transmit power ratio utilized when an FTP packet, requiring a different QoS (high latency) is to be transmitted.

**RRI Channel Power Control**

As discussed above, the RRI channel is time-division-multiplexed with the traffic channel payload. To avoid the need to transmit the RRI portion of the traffic/RRI channel time-slot at a different power level than the traffic portion, the power distribution between the RRI channel and the traffic channel is controlled by the number of chips allocated to the RRI channel as a function of the transmitted data rate.

To ensure correct decoding of a determined number of chips comprising a Walsh covered codeword, a required power can be determined. Alternatively, if the power for traffic/payload necessary for a transmission is known, and the RRI portion of the traffic/RRI channel time-slot is transmitted at the same power, the number of chips adequate for reliable RRI channel decoding can be determined. Consequently, once the data rate and, therefore, the power for transmission of the traffic/RRI channel time-slot is determined, so is the number of chips allocated to the RRI channel. The access terminal generates the five-bit packet type, bi-orthogonally encodes the five bits to obtain symbols, and fills the number of chips allocated to the RRI channel with the symbols. If the number of chips allocated to the RRI channel is greater than the number of symbols, the symbols are repeated until all the chips allocated to the RRI channel are filled.

**AT and AP Structures**

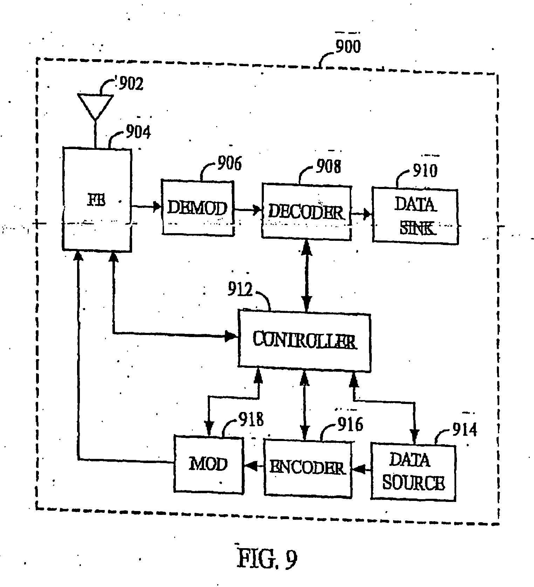

Access terminal **900** is illustrated in **FIG. 9.** Forward link signals are received by antenna **902** and routed to a front end **904** comprising a receiver. The receiver filters, amplifies, demodulates, and digitizes the signal provided by the antenna **902.** The digitized signal is provided to demodulator (DEMOD) **906,** which provides demodulated data to decoder **908.** Decoder **908,** performs the inverse of the signal processing functions done at an access terminal, and provides decoded user data to data sink **910.** The decoder further communicates with a controller **912,** providing to the controller **912** overhead data. The controller **912** further communicates with other blocks comprising the access terminal **900** to provide proper control of the operation of the access terminal's **900,** e.g., data encoding, power control. Controller **912** can comprise, e.g., a processor and a storage medium coupled to the processor and containing a set of instructions executable the processor.

The user data to be transmitted to the access terminal are provided by a data source **914** by direction of the controller **912** to an encoder **916.** The encoder **916** is further provided with overhead data by the controller **912.** The encoder **916** encodes the data and provides the encoded data to a modulator (MOD) **918.** The data processing in the encoder **916** and the modulator **918** is carried out in accordance with reverse link generation as described in the text and figures above. The processed data is then provided to a transmitter within the front end **904.** The transmitter modulates, filters, amplifies, and transmits the reverse link signal over the air, through antenna **902,** on reverse link.

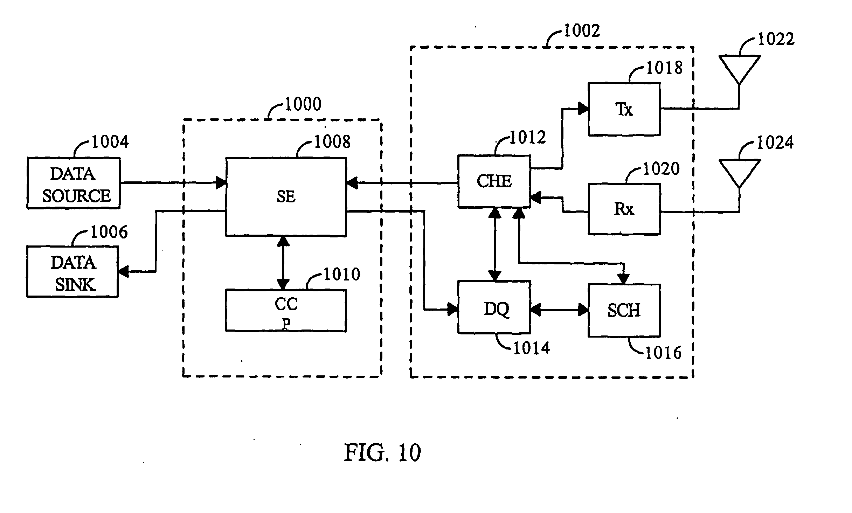

A controller **1000** and an access terminal **1002** is illustrated in **FIG. 10.** The user data generated by a data source **1004,** are provided via an interface unit, e.g., a packet network interface, PSTN, (not shown) to the controller **1000.** As discussed, the controller **1000** interfaces with a plurality of access terminals, forming an access network. (Only one assess terminal **1002** is shown in **FIG. 10** for simplicity). The user data are provided to a plurality of selector elements (only one selector element 1008 is shown in **FIG. 10** for simplicity). One selector element is assigned to control the user data exchange between the data source **1004** and data sink **1006** and one or more base stations under the control of a call control processor **1010.** The call control processor 1010 can comprise, e.g., a processor and a storage medium coupled the processor and containing a set of instructions executable the processor. As illustrated in **FIG. 10,** the selector element **1008** provides the user data to a data queue **1014,** which contains the user data to be transmitted to access terminals (not shown) served by the access terminal **1002.** In accordance with the control of a scheduler **1016,** the user data is provided by the data queue **1014** to a channel element **1012.** The channel element **1012** processes the user data in accordance with the IS-856 standard, and provides the processed data to a transmitter **1018.** The data is transmitted over the forward link through antenna **1022.**

The reverse link signals from access terminals (not shown) are received at the antenna **1024,** and provided to a receiver **1010.** Receiver **1020** filters, amplifies, demodulates, and digitizes the signal, and provides the digitized signal to the channel element **1012.** The channel element **1012** performs the inverse of the signal processing functions done at an access point, and provides decoded data to selector element **1008.** Selector element **1008** routes the user data to a data sink **1006**, and the overhead data to the call control processor **1010.**

One skilled in the art will appreciate that although the flowchart diagrams are drawn in sequential order for comprehension, certain steps can be carried out in parallel in an actual implementation.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the embodiments. Thus, the present invention is not intended to be limited to the embodiments shown herein but is to be accorded the widest scope consistent with the principles and novel features disclosed herein.

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

**Claims**

**1.** An apparatus for power control of a channel, the apparatus comprising:

a processor; and
a storage medium coupled to the processor and containing a set of instructions executable by the processor to:

determine a transmit power of a first channel;
determine a quality of service, QoS, to be provided on the channel;
determine a transmit power ratio of the channel to the first channel for a data rate to be transmitted on the channel in accordance with the QoS;
adjust the transmit power ratio in accordance with a quality metric of the channel; and
compute the channel transmit power in accordance with the adjusted transmit power ratio.

**2.** The apparatus as claimed in claim 1 wherein the processor determines a transmit power of a first channel by executing a set of instructions to:

determine a set point in accordance with a quality metric of a second channel and a detected presence of user data in a third channel; and
increase value of the transmit power if a current value of the transmit power is below the determined set point.

3. The apparatus as claimed in claim 2 wherein the processor executes a set of instructions to:

decrease value of the transmit power if the current value of the transmit power is below the determined set point.

4. The apparatus as claimed in claim 2 wherein the processor determines a set point in accordance with a quality metric of a second channel and a detected presence of user data in a third channel by executing a set of instructions to:

determine the quality metric of the second channel;
detect presence of user data in the third channel;
decode user data if presence of user data in the third channel was detected; and
determine the set point in accordance with the quality metric and a result of the detecting.

5. The apparatus as claimed in claim 4 wherein the processor determines a quality metric of a first channel by executing a set of instructions to:

determine an erasure rate of the second channel.

6. The apparatus as claimed in claim 4 wherein the processor detects presence of user data in the third channel by executing a set of instructions to:

construct a set of hypothesis in accordance with a rate of signaling data and a content of the signaling data;
decode the signaling data in accordance with each set of the set of hypothesis;
select the most likely hypothesis in accordance with the metric used for the hypothesis testing; and
declare presence of user data if the selected hypothesis is greater than a first threshold.

7. The apparatus as claimed in claim 4 wherein the processor decodes user data if presence of the user data in the third channel was detected by executing a set of instructions to:

decode code division multiplexed, CDM, user data from the third channel.

8. The apparatus as claimed in claim 4 wherein the processor determines the set point in accordance with the quality metric and a result of the detecting by executing a set of instructions to:

decrease the set point if the quality metric is less than a second threshold and the decoding was successful; and
increase the set point if the quality metric is greater than the second threshold and the decoding was unsuccessful;
when presence of user data was detected,

9. The apparatus as claimed in claim 4 wherein the processor determines the set point in accordance with the quality metric and a result of the detecting by executing a set of instructions to:

decrease the set point if the quality metric is less than a second threshold; and
increase the set point if the quality metric is greater than the second threshold;

when presence of user data was not detected.

10. The apparatus as claimed in claim 2 wherein the processor adjusts the transmit power ratio in accordance with a quality metric of the channel by executing a set of instructions to:

increase the transmit power ratio by a first determined amount when a first determined number of re-transmissions of user data over the channel failed.

11. The apparatus as claimed in claim 2 wherein the processor adjusts the transmit power ratio in accordance with a quality metric of the channel by executing a set of instructions to:

decrease the transmit power ratio by a second determined amount when user data has been successfully transmitted over the channel within a second determined number of re-transmissions.

12. The apparatus as claimed in claim 2 wherein the processor adjusts the transmit power ratio in accordance with a quality metric of the channel by executing a set of instructions to:

determine a rise over thermal differential between a transmission interval of the first channel and a transmission interval of the channel;
adjust the rise over thermal differential; and
adjust the transmit power ratio in accordance with the adjusted rise over thermal differential.

13. The apparatus as claimed in claim 12 wherein the processor determines a rise over thermal differential between a transmission interval of the first channel and a transmission interval of the channel by executing a set of instructions to:

measure a rise over thermal in a transmission interval of the first channel;
measure a rise over thermal in the transmission interval of the channel; and
compute a difference between the rise over thermal in the transmission interval of the first channel and the rise over thermal in the transmission interval of the channel.

14. The apparatus as claimed in claim 12 wherein the processor determines a rise over thermal differential between a transmission interval of the first channel and the transmission interval of the channel by executing a set of instructions to:

estimate the rise over thermal differential.

15. The apparatus as claimed in claim 14 wherein the processor estimates the rise over thermal differential by executing a set of instructions to:

estimate the rise over thermal differential in accordance with the quality metric of the channel.

16. The apparatus as claimed in claim 2 wherein the channel comprises a first traffic channel; and wherein the first channel comprises a pilot channel.

17. The apparatus as claimed in claim 3 wherein the second channel comprises a data request channel; and wherein the third channel comprises a second traffic channel.

18. A method for power control of a channel, the method comprising:

determining a transmit power of a first channel;
determining a quality of service, QoS, to be provided on the channel;
determining a transmit power ratio of the channel to the first channel for a data rate to be transmitted on the channel in accordance with the QoS;
adjusting the transmit power ratio in accordance with a quality metric of the channel; and
computing the channel transmit power in accordance with the adjusted transmit power ratio.

19. The method as claimed in claim 18 wherein the determining a transmit power of a first channel comprises:

determining a set point in accordance with a quality metric of a second channel and a detected presence of user data in a third channel; and
increasing value of the transmit power if a current value of the transmit power is below the determined set point.

20. The method as claimed in claim 19 further comprising:

decreasing value of the transmit power if the current value of the transmit power is below the determined set point.

21. The method as claimed in claim 19 wherein the determining a set point in accordance with a quality metric of a second channel and a detected presence of user data in a third channel comprises:

determining the quality metric of the second channel;
detecting presence of user data in the third channel;
decoding user data if presence of user data in the third channel was detected; and
determining the set point in accordance with the quality metric and a result of the detecting.

22. The method as claimed in claim 21 wherein the determining a quality metric of a first channel comprises:

determining an erasure rate of the second channel.

23. The method as claimed in claim 21 wherein the detecting presence of user data in the third channel comprises:

constructing a set of hypothesis in accordance with a rate of signaling data and a content of the signaling data;
decoding the signaling data in accordance with each set of the set of hypothesis;
selecting the most likely hypothesis in accordance with the metric used for the hypothesis testing; and
declaring presence of user data if the selected hypothesis is greater than a first threshold.

24. The method as claimed in claim 21 wherein the decoding user data if presence of the user data in the third channel was detected comprises:

decoding code division multiplexed, CDM, user data from the third channel.

25. The method as claimed in claim 21 wherein the determining the set point in accordance with the quality metric and a result of the detecting comprises:

decreasing the set point if the quality metric is less than a second threshold and the decoding was successful; and
increasing the set point if the quality metric is greater than the second threshold and the decoding was unsuccessful;
when presence of user data was detected.

26. The method as claimed in claim 21 wherein the determining the set point in accordance with the quality metric and a result of the detecting comprises:

decreasing the set point if the quality metric is less than a second threshold; and
increasing the set point if the quality metric is greater than the second threshold;

when presence of user data was not detected.

27. The method as claimed in claim 19 wherein the adjusting the transmit power ratio in accordance with a quality metric of the channel comprises:

increasing the transmit power ratio by a first determined amount when a first determined number of re-transmissions of user data over the channel failed.

28. The method as claimed in claim 19 wherein the adjusting the transmit power ratio in accordance with a quality metric of the channel comprises:

decreasing the transmit power ratio by a second determined amount when user data has been successfully transmitted over the channel within a second determined number of re-transmissions.

29. The method as claimed in claim 19 wherein the adjusting the transmit power ratio in accordance with a quality metric of the channel comprises:

determining a rise over thermal differential between a transmission interval of the first channel and a transmission interval of the channel;
adjusting the rise over thermal differential; and
adjusting the transmit power ratio in accordance with the adjusted rise over thermal differential.

30. The method as claimed in claim 29 wherein the determining a rise over thermal differential between a transmission interval of the first channel and a transmission interval of the channel comprises:

measuring a rise over thermal in a transmission interval of the first channel;
measuring a rise over thermal in the transmission interval of the channel; and
computing a difference between the rise over thermal in the transmission interval of the first channel and the rise over thermal in the transmission interval of the channel.

31. The method as claimed in claim 29 wherein the determining a rise over thermal differential between a transmission interval of the first channel and the transmission interval of the channel comprises:

estimating the rise over thermal differential.

32. The method as claimed in claim 31 wherein the estimating the rise over thermal differential comprises:

estimating the rise over thermal differential in accordance with the quality metric of the channel.

33. The method as claimed in claim 19 wherein the channel comprises a first traffic channel; and
wherein the first channel comprises a pilot channel.

34. The method as claimed in claim 20 wherein the second channel comprises a data request channel; and
wherein the third channel comprises a second traffic channel.

**Patentansprüche**

1. Eine Vorrichtung zur Leistungssteuerung eines Kanals, wobei die Vorrichtung Folgendes aufweist:

einen Prozessor; und
ein Speichermedium gekoppelt an den Prozessor und einen Satz von Instruktionen enthaltend, der durch den Prozessor ausführbar ist, um:

eine Sendeleistung eines ersten Kanals zu bestimmen;
eine Qualität eines Dienstes, QoS, zu bestimmen, die bzw. der auf dem Kanal vorzusehen ist;
Bestimmen eines Sendeleistungsverhältnisses des Kanals zu dem ersten Kanal für eine auf dem Kanal mit der QoS zu übertragende Datenrate;
Anpassen des Sendeleistungsverhältnisses gemäß einer Qualitätsmetrik des Kanals; und
Berechnen der Kanalsendeleistung gemäß dem angepassten Sendeleistungsverhältnis.

2. Vorrichtung nach Anspruch 1, wobei der Prozessor eine Sendeleistung eines ersten Kanals bestimmt, durch Ausführen eines Satzes von Instruktionen und zwar zum:

Bestimmen eines Setzpunktes gemäß einer Qualitätsmetrik eines zweiten Kanals und Detektieren eines Vorliegens von Benutzerdaten in einem dritten Kanal; und
Erhöhen eines Wertes der Sendeleistung, wenn ein momentaner Wert der Sendeleistung unterhalb des bestimmten Setzpunktes bzw. Einstellpunktes liegt.

3. Vorrichtung gemäß Anspruch 2, wobei der Prozessor einen Satz von Instruktionen ausführt, um:

den Wert der Sendeleistung zu senken, wenn der momentane Wert der Sendeleistung unter dem bestimmten Setzpunkt liegt.

4. Vorrichtung gemäß Anspruch 2, wobei der Prozessor einen Setzpunkt gemäß einer Qualitätsmetrik eines zweiten Kanals bestimmt und ein detektiertes Vorliegen von Benutzerdaten in einem dritten Kanal, und zwar durch Ausführen eines Satzes von Instruktionen, um:

die Qualitätsmetrik des zweiten Kanals zu bestimmen;
das Vorliegen von Benutzerdaten in dem dritten Kanal zu detektieren;
Benutzerdaten zu decodieren, wenn das Vorliegen von Benutzerdaten in dem dritten Kanal detektiert wurde; und

den Einstellpunkt gemäß der Qualitätsmetrik und ein Ergebnis des Detektierens zu bestimmen.

5. Vorrichtung gemäß Anspruch 4, wobei der Prozessor eine Qualitätsmetrik eines ersten Kanals durch Ausführen eines Satzes von Instruktionen bestimmt, und zwar um:

eine Löschrate des zweiten Kanals zu bestimmen.

6. Vorrichtung gemäß Anspruch 4, wobei der Prozessor das Vorliegen von Benutzerdaten in dem dritten Kanal detektiert durch Ausführen eines Satzes von Instruktionen, um:

einen Satz von Hypothesen gemäß einer Rate von Signalisierungsdaten und einem Inhalt der Signalisierungsdaten zu konstruieren;
die Signalisierungsdaten gemäß eines jeden Satzes der Sätze von Hypothesen zu decodieren;
die wahrscheinlichste Hypothese gemäß der Metrik verwendet für das Hypothesetesten auszuwählen; und
das Vorliegen von Benutzerdaten zu deklarieren, wenn die ausgewählte Hypothese größer ist als eine erste Schwelle.

7. Vorrichtung gemäß Anspruch 4, wobei der Prozessor Benutzerdaten decodiert, wenn das Vorliegen von Benutzerdaten in dem dritten Kanal detektiert wurde durch Ausführen eines Satzes von Instruktionen, um:

codemultiplexierte Benutzerdaten bzw. CDM-Benutzerdaten (CDM = Code Division Multiplexed) von dem dritten Kanal zu decodieren.

8. Vorrichtung gemäß Anspruch 4, wobei der Prozessor den Einstellpunkt gemäß der Qualitätsmetrik und einem Ergebnis der Detektierung bestimmt, und zwar durch Ausführen eines Satzes von Instruktionen um:

den Einstellpunkt zu senken, wenn die Qualitätsmetrik geringer ist als eine zweite Schwelle ist und das Decodieren erfolgreich war; und
den Einstellpunkt zu erhöhen, wenn die Qualitätsmetrik größer ist als die zweite Schwelle und das Decodieren nicht erfolgreich war;
wenn das Vorliegen von Benutzerdaten detektiert wurde.

9. Vorrichtung gemäß Anspruch 4, wobei der Prozessor den Einstellpunkt gemäß der Qualitätsmetrik und einem Ergebnis des Detektierens bestimmt, und zwar durch Ausführen eines Satzes von Instruktionen, um:

den Einstellpunkt zu senken, wenn die Qualitätsmetrik geringer ist als eine zweite Schwelle; und
den Einstellpunkt zu erhöhen, wenn die Qualitätsmetrik größer ist als die zweite Schwelle;
wenn das Vorliegen von Benutzerdaten nicht detektiert wurde.

10. Vorrichtung gemäß Anspruch 2, wobei der Prozessor das Sendeleistungsverhältnis gemäß einer Qualitätsmetrik des Kanals anpasst, und zwar durch Ausführen eines Satzes von Instruktionen, um:

das Sendeleistungsverhältnis um einen ersten bestimmten Betrag zu senken, wenn eine erste bestimmte Anzahl von Neusendungen von Benutzerdaten über den Kanal fehlgeschlagen ist.

11. Vorrichtung gemäß Anspruch 2, wobei der Prozessor das SendeLeistungsverhältnis gemäß einer Qualitätsmetrik des Kanals anpasst, und zwar durch Ausführen eines Satzes von Instruktionen, um:

das Sendeleistungsverhältnis um einen zweiten vorbestimmten Betrag zu senken, wenn Benutzerdaten erfolgreich über den Kanal innerhalb einer zweiten bestimmten Anzahl von Neusendungen übermittelt bzw. gesendet wurden.

12. Vorrichtung gemäß Anspruch 2, wobei der Prozessor das Sendeleistungsverhältnis gemäß einer Qualitätsmetrik des Kanals einstellt bzw. anpasst, und zwar durch Ausführen eines Satzes von Instruktionen, um:

ein "Rise-Over-Thermal"- bzw. ein "Abstand zum thermischen Rauschen"-Differential zwischen einem Sendeintervall des ersten Kanals und eines Sendeintervalls des Kanals zu bestimmen; und das "Rise-Over-Thermal"-Differential anzupassen, und das Sendeleistungsverhältnis gemäß dem angepassten "Rise-Over-Thermal"-Differential anzupassen.

**13.** Vorrichtung gemäß Anspruch 12, wobei der Prozessor ein "Rise-Over-Thermal"-Differential zwischen einem Sendeintervall des ersten Kanals und einem Sendeintervalls des Kanals bestimmt, und zwar durch Ausführen eines Satzes von Instruktionen, um:

ein "Rise-Over-Thermal" in einem Sendeintervall des ersten Kanals zu messen;
ein "Rise-Over-Thermal" in dem Sendeintervall des Kanals zu messen; und
eine Differenz zwischen dem "Rise-Over-Thermal" in dem Sendeintervall des ersten Kanals und dem "Rise-Over-Thermal" in dem Sendeintervall des Kanals zu berechnen.

**14.** Vorrichtung gemäß Anspruch 12, wobei der Prozessor ein "Rise-Over-Thermal"-Differential zwischen einem Sendeintervall des ersten Kanals und dem Sendeintervall des Kanals bestimmt, und zwar durch Ausführen eines Satzes von Instruktionen, um:

das "Rise-Over-Thermal"-Differential zu schätzen.

**15.** Vorrichtung gemäß Anspruch 14, wobei der Prozessor das "Rise-Over-Thermal"-Differential schätzt, und zwar durch Ausführen eines Satzes von Instruktionen, um:

Das "Rise-Over-Thermal"-Differential gemäß der Qualitätsmetrik des Kanals zu schätzen.

**16.** Vorrichtung gemäß Anspruch 2, wobei der Kanal einen ersten Verkehrskanal aufweist; und wobei der erste Kanal einen Pilotkanal aufweist.

**17.** Vorrichtung gemäß Anspruch 3, wobei der zweite Kanal einen Datenanfragekanal aufweist; und wobei der dritte Kanal einen zweiten Verkehrskanal aufweist.

**18.** Ein Verfahren zur Leistungssteuerung eines Kanals, wobei das Verfahren Folgendes aufweist:

Bestimmen einer Sendeleistung für einen ersten Kanal;
Bestimmen einer Dienstqualität, QoS bzw. Quality of Service, der bzw. die auf dem Kanal vorzusehen ist;
Bestimmen eines Sendeleistungsverhältnisses des Kanals zu dem ersten Kanal für eine Datenrate, die auf dem Kanal gemäß dem QoS zu senden ist;
Anpassen des Sendeleistungsverhältnisses gemäß einer Qualitätsmetrik des Kanals; und
Berechnen der Kanalsendeleistung gemäß dem angepassten Sendeleistungsverhältnis.

**19.** Verfahren gemäß Anspruch 18, wobei das Bestimmen einer Sendeleistung eines ersten Kanals Folgendes aufweist:

Bestimmen eines Einstellpunktes gemäß einer Qualitätsmetrik eines zweiten Kanals und Detektieren des Vorliegens von Benutzerdaten in einem dritten Kanal; und
Erhöhen des Wertes der Sendeleistung, wenn ein momentaner Wert der Sendeleistung unter dem vorbestimmten Einstellpunkt liegt.

**20.** Verfahren gemäß Anspruch 19, das weiterhin Folgendes aufweist:

Senken des Wertes der Sendeleistung, wenn der momentane Wert der Sendeleistung unter dem vorbestimmten Einstellpunkt liegt.

**21.** Verfahren gemäß Anspruch 19, wobei das Bestimmen eines Einstellpunktes gemäß einer Qualitätsmetrik eines zweiten Kanals und eines detektierten Vorliegens von Benutzerdaten in einem dritten Kanal Folgendes aufweist:

Bestimmen der Qualitätsmetrik des zweiten Kanals;
Detektieren des Vorliegens von Benutzerdaten in dem dritten Kanal;
Decodieren von Benutzerdaten, wenn das Vorliegen von Benutzerdaten in dem dritten Kanal detektiert wurde; und
Bestimmen des Einstellpunktes gemäß der Qualitätsmetrik und einem Ergebnis des Detektierens.

**22.** Verfahren gemäß Anspruch 21, wobei das Bestimmen einer Qualitätsmetrik eines ersten Kanals Folgendes aufweist:

Bestimmen einer Löschrate des zweiten Kanals.

**23.** Verfahren gemäß Anspruch 21, wobei das Selektieren von Benutzerdaten in dem dritten Kanal Folgendes aufweist:

Konstruieren eines Satzes von Hypothesen gemäß einer Rate von Signalisierungsdaten und einem Inhalt der Signalisierungsdaten;
Decodieren der Signalisierungsdaten gemäß eines jeden Satzes der Sätze von Hypothesen;
Auswählen der wahrscheinlichsten Hypothese gemäß der Metrik, die für das Hypothesetesten verwendet wurde; und
Erklären des Vorliegens von Benutzerdaten, wenn die ausgewählte Hypothese größer ist als eine erste Schwelle.

**24.** Verfahren gemäß Anspruch 21, wobei das Decodieren von Benutzerdaten, wenn das Vorliegen von den Benutzerdaten im dritten Kanal detektiert wurde, Folgendes aufweist:

Decodieren von codemultiplexierten bzw. CDM-Benutzerdaten von dem dritten Kanal.

**25.** Verfahren gemäß Anspruch 21, wobei das Bestimmen des Einstellpunktes gemäß der Qualitätsmetrik und einem Ergebnis des Detektierens Folgendes aufweist:

Senken des Einstellpunktes, wenn die Qualitätsmetrik geringer ist als eine zweite Schwelle und das Decodieren erfolgreich war; und
Erhöhen des Einstellpunktes, wenn die Qualitätsmetrik größer ist als die zweite Schwelle und das Decodieren nicht erfolgreich war;
und zwar, wenn das Vorliegen von Benutzerdaten detektiert wurde.

**26.** Verfahren gemäß Anspruch 21, wobei das Bestimmen des Einstellpunktes gemäß der Qualitätsmetrik und einem Ergebnis des Detektierens Folgendes aufweist:

Senken des Einstellpunktes, wenn die Qualitätsmetrik geringer ist als eine zweite Schwelle; und
Erhöhen des Einstellpunktes, wenn die Qualitätsmetrik größer ist als die zweite Schwelle;
und zwar, wenn das Vorliegen von Benutzerdaten nicht detektiert wurde.

**27.** Verfahren gemäß Anspruch 19, wobei das Anpassen des Sendeleistungsverhältnisses gemäß einer Qualitätsmetrik auf dem Kanal Folgendes aufweist:

Erhöhen des Sendeleistungsverhältnisses um einen ersten vorbestimmten Betrag, wenn eine erste bestimme Anzahl von Neuübertragungen von Benutzerdaten über den Kanal fehlgeschlagen ist.

**28.** Verfahren gemäß Anspruch 19, wobei das Anpassen des Sendeleistungsverhältnisses gemäß einer Qualitätsmetrik des Kanals Folgendes aufweist:

Senken des Sendeleistungsverhältnisses um einen zweiten bestimmten Betrag, wenn Benutzerdaten erfolgreich über den Kanal innerhalb einer zweiten bestimmten Anzahl von Neuübermittlungen gesendet wurden.

**29.** Verfahren gemäß Anspruch 19, wobei das Anpassen des Sendeleistungsverhältnisses gemäß einer Qualitätsmetrik des Kanals Folgendes aufweist:

Bestimmen eines "Rise-Over-Thermal"-Differentials zwischen einem Sendeintervall des ersten Kanals und einem Sendeintervall des Kanals; Anpassen des "Rise-Over-Thermal"-Differentials; und
Anpassen des Sendeleistungsverhältnisses gemäß dem angepassten "Rise-Over-Thermal"-Differential.

**30.** Verfahren gemäß Anspruch 29, wobei das Bestimmen eines "Rise-Over-Thermal"-Differentials zwischen einem Sendeintervall des ersten Kanals und einem Sendeintervall des Kanals Folgendes aufweist:

Messen eines "Rise-Over-Thermal" in einem Sendeintervall des ersten Kanals;
Messen eines "Rise-Over-Thermal" in dem Sendeintervall des Kanals; und

Berechnen einer Differenz zwischen dem "Rise-Over-Thermal" in dem Sendeintervall des ersten Kanals und des "Rise-Over-Thermal" in dem Sendeintervall des Kanals.

31. Verfahren gemäß Anspruch 29, wobei das Bestimmen eines "Rise-Over-Thermal"-Differentials zwischen einem Sendeintervall des ersten Kanals und dem Sendeintervall des Kanals Folgendes aufweist:

Schätzen des "Rise-Over-Thermal"-Differentials.

32. Verfahren gemäß Anspruch 31, wobei das Schätzen des "Rise-Over-Thermal"-Differentials Folgendes aufweist:

Schätzen des "Rise-Over-Thermal"-Differentials gemäß der Qualitätsmetrik des Kanals.

33. Verfahren gemäß Anspruch 19, wobei der Kanal einen ersten Verkehrskanal aufweist; und wobei der erste Kanal einen Pilotkanal aufweist.

34. Verfahren gemäß Anspruch 20, wobei der zweite Kanal einen Datenanfragekanal aufweist; und wobei der dritte Kanal einen zweiten Verkehrskanal aufweist.


**Revendications**

1. Dispositif de commande de puissance d'un canal, ce dispositif comprenant :

un processeur ; et
un milieu de mémorisation couplé au processeur et contenant un ensemble d'instructions exécutables par le processeur pour :

déterminer une puissance d'émission d'un premier canal ;
déterminer une qualité de service, QoS, à fournir sur le canal ;
déterminer un rapport de puissance d'émission du canal par rapport au premier canal pour un débit de données à émettre sur le canal en accord avec le QoS ;
régler le rapport de puissance d'émission en accord avec une métrique de qualité du canal ; et
calculer la puissance d'émission du canal en accord avec le rapport de puissance d'émission réglé.

2. Dispositif selon la revendication 1, dans lequel le processeur détermine une puissance d'émission d'un premier canal en exécutant un ensemble d'instructions pour :

déterminer un point de réglage en accord avec une métrique de qualité d'un second canal et la présence détectée de données d'utilisateur dans un troisième canal ; et
augmenter la valeur de la puissance d'émission si la valeur courante de la puissance d'émission est en dessous du point de réglage déterminé.

3. Dispositif selon la revendication 2, dans lequel le processeur exécute un ensemble d'instructions pour diminuer la valeur de la puissance d'émission si la valeur courante de la puissance d'émission est en dessous du point de réglage déterminé.

4. Dispositif selon la revendication 2, dans lequel le processeur détermine un point de réglage en accord avec une métrique de qualité d'un second canal et une présence détectée de données d'utilisateur dans un troisième canal en exécutant un ensemble d'instructions pour :

déterminer la métrique de qualité du second canal ;
détecter la présence de données d'utilisateur dans le troisième canal ;
décoder les données d'utilisateur si la présence de données d'utilisateur dans un troisième canal a été détectée ; et
déterminer le point de réglage en accord avec la métrique de qualité par suite de la détection.

5. Dispositif selon la revendication 4, dans lequel le processeur détermine une métrique de qualité d'un premier canal en exécutant un ensemble d'instructions pour déterminer une vitesse d'effacement du second canal.

**6.** Dispositif selon la revendication 4, dans lequel le processeur détecte la présence de données d'utilisateur dans le troisième canal en exécutant un ensemble d'instructions pour :

construire un ensemble d'hypothèses en accord avec un débit de données de signalisation et un contenu des données de signalisation ;
décoder les données de signalisation en accord avec chaque ensemble de l'ensemble d'hypothèses ;
sélectionner l'hypothèse la plus probable en accord avec la métrique utilisée pour le test d'hypothèse ; et
déclarer la présence de données d'utilisateur si l'hypothèse sélectionnée est supérieure à un premier seuil.

**7.** Dispositif selon la revendication 4, dans lequel le processeur décode les données d'utilisateur si la présence des données d'utilisateur dans le troisième canal a été détectée en exécutant un ensemble d'instructions pour décoder des données d'utilisateur multiplexées par différence de code, CDM, à partir du troisième canal.

**8.** Dispositif selon la revendication 4, dans lequel le processeur détermine le point de réglage en accord avec la métrique de qualité et par suite de la détection en exécutant un ensemble d'instructions pour :

diminuer le point de réglage si la métrique de qualité est inférieure à un second seuil et que le décodage a été couronné de succès ; et
augmenter le point de réglage si la métrique de qualité est supérieure au second seuil et que le code de décodage a été en échec ;
quand la présence de données d'utilisateur a été détectée.

**9.** Dispositif selon la revendication 4, dans lequel le processeur détermine le point de réglage en accord avec la métrique de qualité et par suite de la détection en exécutant un ensemble d'instructions pour :

diminuer le point de réglage si la métrique de qualité est inférieure à un second seuil ; et
augmenter le point de réglage si la métrique de qualité est supérieure au second seuil ;
quand la présence de données d'utilisateur n'a pas été détectée.

**10.** Dispositif selon la revendication 2, dans lequel le processeur règle le rapport de puissance d'émission en accord avec une métrique de qualité du canal en exécutant un ensemble d'instructions pour augmenter le rapport de puissance d'émission d'une première quantité déterminée quand un premier nombre déterminé de réémissions de données d'utilisateur sur le canal a échoué.

**11.** Dispositif selon la revendication 2, dans lequel le processeur règle le rapport de puissance d'émission en accord avec une métrique de qualité du canal en exécutant un ensemble d'instructions pour réduire le rapport de puissance d'émission d'une seconde quantité déterminée quand les données d'utilisateur ont été émises avec succès sur le canal en moins d'un second nombre déterminé de réémissions.

**12.** Dispositif selon la revendication 2, dans lequel le processeur règle le rapport de puissance d'émission en accord avec une métrique de qualité du canal en exécutant un ensemble d'instructions pour :

déterminer une croissance sur une différence thermique entre un intervalle d'émission du premier canal et un intervalle d'émission du premier canal et un intervalle d'émission du canal ;
régler la croissance sur la différence thermique ; et
régler le rapport de puissance d'émission avec l'augmentation réglée sur la différence thermique.

**13.** Dispositif selon la revendication 12, dans lequel le processeur détermine une croissance sur la différence thermique entre un intervalle d'émission du premier canal et un intervalle d'émission du canal en exécutant un ensemble d'instructions pour :

mesurer une augmentation par rapport à la température dans un intervalle d'émission du premier canal ;
mesurer une augmentation par rapport à la température dans un intervalle d'émission du canal ; et
calculer la différence entre l'augmentation par rapport à la température dans l'intervalle d'émission du premier canal et l'augmentation sur la température dans l'intervalle d'émission du canal.

**14.** Dispositif selon la revendication 12, dans lequel le processeur détermine une croissance sur la différence thermique entre un intervalle d'émission du premier canal et l'intervalle d'émission du canal en exécutant un ensemble d'instructions pour estimer la croissance sur la différence thermique.

**15.** Dispositif selon la revendication 14, dans lequel le processeur détermine une croissance sur la différence thermique entre un intervalle d'émission du premier canal et l'intervalle d'émission du canal en exécutant un ensemble d'instructions pour estimer la croissance sur la différence thermique en accord avec la métrique de qualité du canal.

**16.** Dispositif selon la revendication 2, dans lequel le canal comprend un premier canal de communication et dans lequel le premier canal comprend un canal pilote.

**17.** Dispositif selon la revendication 3, dans lequel le second canal comprend un canal de requête de données et dans lequel le troisième canal comprend un second canal de communication.

**18.** Procédé de commande de puissance d'un canal, ce procédé comprenant :

déterminer une puissance d'émission d'un premier canal ;
déterminer une qualité de service, QoS, à fournir sur le canal ;
déterminer un rapport de puissance d'émission du canal par rapport au premier canal pour un débit de données à émettre sur le canal en accord avec le QoS ;
régler le rapport de puissance d'émission en accord avec une métrique de qualité du canal ; et
calculer la puissance d'émission du canal en accord avec le rapport de puissance d'émission réglé.

**19.** Procédé selon la revendication 18, dans lequel la détermination d'une puissance d'émission d'un premier canal comprend :

déterminer un point de réglage en accord avec une métrique de qualité d'un second canal et la présence détectée de données d'utilisateur dans un troisième canal ; et
augmenter la valeur de la puissance d'émission si la valeur courante de la puissance d'émission est en dessous du point de réglage déterminé.

**20.** Procédé selon la revendication 19, comprenant en outre :

diminuer la valeur de la puissance d'émission si la valeur courante de la puissance d'émission est en dessous du point de réglage déterminé.

**21.** Procédé selon la revendication 19, dans lequel la détermination d'un point de réglage en accord avec une métrique de qualité d'un second canal et une présence détectée de données d'utilisateur dans un troisième canal comprend :

déterminer la métrique de qualité du second canal ;
détecter la présence de données d'utilisateur dans le troisième canal ;
décoder les données d'utilisateur si la présence de données d'utilisateur dans un troisième canal a été détectée ; et
déterminer le point de réglage en accord avec la métrique de qualité par suite de la détection.

**22.** Procédé selon la revendication 21, dans lequel la détermination d'une métrique comprend la détermination d'une vitesse d'effacement du second canal.

**23.** Procédé selon la revendication 21, dans lequel la détection de la présence de données d'utilisateur dans le troisième canal comprend :

construire un ensemble d'hypothèses en accord avec un débit de données de signalisation et un contenu des données de signalisation ;
décoder les données de signalisation en accord avec chaque ensemble de l'ensemble d'hypothèses ;
sélectionner l'hypothèse la plus probable en accord avec la métrique utilisée pour le test d'hypothèse ; et
déclarer la présence de données d'utilisateur si l'hypothèse sélectionnée est supérieure à un premier seuil.

**24.** Procédé selon la revendication 21, dans lequel le décodage des données d'utilisateur si la présence des données d'utilisateur dans le troisième canal a été détectée comprend le décodage des données d'utilisateur multiplexées par différence de code, CDM, à partir du troisième canal.

**25.** Procédé selon la revendication 21, dans lequel la détermination du point de réglage en accord avec la métrique de qualité et par suite de la détection comprend :

diminuer le point de réglage si la métrique de qualité est inférieure à un second seuil et que le décodage a été couronné de succès ; et
augmenter le point de réglage si la métrique de qualité est supérieure au second seuil et que le code de décodage a été en échec ;
quand la présence de données d'utilisateur a été détectée.

**26.** Procédé selon la revendication 21, dans lequel la détermination du point de réglage en accord avec la métrique de qualité et par suite de la détection comprend :

diminuer le point de réglage si la métrique de qualité est inférieure à un second seuil ; et
augmenter le point de réglage si la métrique de qualité est supérieure au second seuil ;
quand la présence de données d'utilisateur n'a pas été détectée.

**27.** Procédé selon la revendication 19, dans lequel le réglage du rapport de puissance d'émission en accord avec une métrique de qualité du canal comprend l'augmentation du rapport de puissance d'émission d'une première quantité déterminée quand un premier nombre déterminé de réémissions de données d'utilisateur sur le canal a échoué.

**28.** Procédé selon la revendication 19, dans lequel le réglage du rapport de puissance d'émission en accord avec une métrique de qualité du canal comprend la réduction du rapport de puissance d'émission d'une seconde quantité déterminée quand les données d'utilisateur ont été émises avec succès sur le canal en moins d'un second nombre déterminé de réémissions.

**29.** Procédé selon la revendication 19, dans lequel le réglage du rapport de puissance d'émission en accord avec une métrique de qualité du canal comprend :

déterminer une croissance sur une différence thermique entre un intervalle d'émission du premier canal et un intervalle d'émission du premier canal et un intervalle d'émission du canal ;
régler la croissance sur la différence thermique ; et
régler le rapport de puissance d'émission avec l'augmentation réglée sur la différence thermique.

**30.** Procédé selon la revendication 29, dans lequel la détermination d'une croissance de la différence thermique entre un intervalle d'émission du premier canal et un intervalle d'émission du canal comprend :

mesurer une augmentation par rapport à la température dans un intervalle d'émission du premier canal ;
mesurer une augmentation par rapport à la température dans un intervalle d'émission du canal ; et
calculer la différence entre l'augmentation par rapport à la température dans l'intervalle d'émission du premier canal et l'augmentation sur la température dans l'intervalle d'émission du canal.

**31.** Procédé selon la revendication 29, dans lequel la détermination d'une croissance de la différence thermique entre un intervalle d'émission du premier canal et un intervalle d'émission du canal comprend l'estimation de la croissance sur la différence thermique.

**32.** Procédé selon la revendication 31, dans lequel l'estimation de la croissance sur la différence thermique comprend l'estimation de la croissance sur la différence thermique en accord avec la métrique de qualité du canal.

**33.** Procédé selon la revendication 19, dans lequel le canal comprend un premier canal de communication et dans lequel le premier canal comprend un canal pilote.

**34.** Procédé selon la revendication 20, dans lequel le second canal comprend un canal de requête de données et dans lequel le troisième canal comprend un second canal de communication.

EP 1 602 187 B1

FIG. 1

39

FIG. 2

EP 1 602 187 B1

FIG. 3

FIG. 4A

EP 1 602 187 B1

FIG. 4B

FIG. 4C

FIG. 4D

FIG. 5A

PILOT CHANNEL
SYMBOLS
(ALL 0's)

510

510(1)

510(2)

WC

510(4)

M

B

512

512(10)

WC

PR
CHANNEL
SYMBOLS

512(2)

512(4)

512(6)

ENCODER

CR

SM

512(8)

F

FIG. 5B

FIG. 5C

FIG. 6A

FIG. 6B

FIG. 6C

47

FIG. 7

1-SLOT

N | N+1 | N+2 | N+3 | N+4 | N+5 | N+6 | N+7 | N+8 | N+9 | N+10 | N+11 | N+12 | N+13 | N+14 | N+15

ACCESS NETWORK

TDM/OFDM DATA PKT 1 DECODED

TDM/OFDM DATA PKT 2 DECODED

PR(OL 1)

PR(OL 3)

PG(SD 1)

PG(SD 1)

PR(OL 2)

PG(SD 1)

ACCESS TERMINAL

n | n+1 | n+2 | n+3 | n+4 | n+5 | n+6 | n+7 | n+8 | n+9 | n+10 | n+11 | n+12 | n+13 | n+14 | n+15

1SLOT 1SLOT

1 TDMA INTERVAL

TDM/OFDM DATA PACKET 1

TDM/OFDM DATA PACKET 2

OVERHEAD/CDM SLOT PORTION

TDM/OFDM SLOT PORTION

EP 1 602 187 B1

48

FIG. 8

FIG. 9

FIG. 10